# DEMANDE DE BREVET EUROPEEN

(11) **EP 1 840 329 A1**
(43) Date de publication de la demande: **03.10.2007**
(21) Numéro de dépôt: 07075229.0
(22) Date de dépôt: 26.03.2007
(51) Int. Cl.: F01D 5/14, F01D 9/02

(54) **Aube de redresseur optimisée, secteur de redresseurs, étage de compression, compresseur et turbomachine comportant une telle aube**

(30) Priorité: 30.03.2006 FR 0602738
(71) Demandeur: SNECMA, 75015 Paris (FR)
(72) Inventeur: Aynes, Claire, 77240 Vert Saint Denis (FR); Boutteville, Evelyne, 94430 Chennevieres sur Marne (FR); Niclot, Thierry, 91600 Savigny sur Orge (FR)
(74) Mandataire: Nguyen, Dominique

(57) **Abrégé**

L'invention concerne un nouveau profil aérodynamique optimisé d'aube. Elle propose un nouveau type de secteur de redresseurs pour lequel une optimisation de la forme ainsi qu'un aménagement local de la géométrie des aubes a été réalisé, le tout permettant de diminuer le niveau de contrainte dans la brasure liant l'aube à sa virole extérieure tout en respectant les exigences aérodynamiques et mécaniques imposés à l'aube.

## Description

L'invention se rapporte au domaine des turbomachines, notamment des turboréacteurs, et concerne des aubes de redresseur disposées au sein d'un compresseur.

Elle concerne plus précisément un nouveau profil aérodynamique optimisé d'aube afin de répondre aux exigences aérodynamiques et mécaniques imposés à l'aube.

Dans la suite de la description, les termes "amont" ou "aval" seront utilisés pour désigner les positions des éléments de structure les uns par rapport aux autres en direction axiale, en prenant pour référence le sens d'écoulement des gaz. De même, les termes "interne" ou "radialement interne" et "externe" ou "radialement externe" seront utilisés pour désigner les positions des éléments de structure les uns par rapport aux autres en direction radiale, en prenant pour référence l'axe de rotation de la turbomachine.

Une turbomachine comprend un ou plusieurs compresseur(s) délivrant de l'air sous pression à une chambre de combustion où l'air est mélangé à du carburant et allumé afin de générer des gaz de combustion chauds. Ces gaz s'écoulent vers l'aval de la chambre vers une ou plusieurs turbine(s) qui transforme(nt) l'énergie ainsi reçue afin d'entraîner en rotation le ou les compresseur(s) et ainsi fournir le travail nécessaire, par exemple, à la motorisation d'un avion.

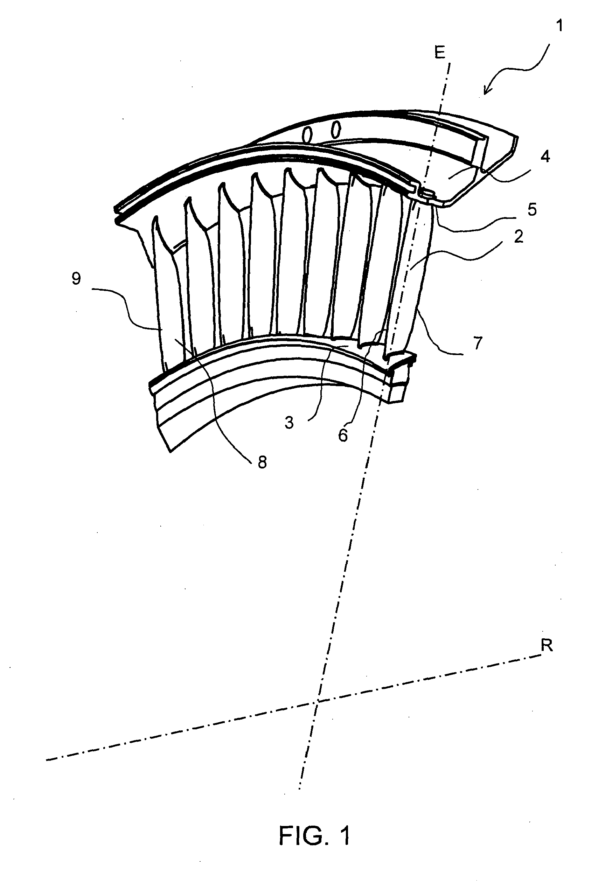

Un compresseur, par exemple un compresseur haute pression, est constitué d'un ou plusieurs étages de compression comprenant chacun une grille d'aubes fixes, suivie d'une roue mobile munie d'aubes mobiles. La grille d'aubes fixes, encore appelée grille de redresseurs peut être composée d'un ensemble de secteurs angulaires de redresseurs, dont un exemple est illustré à la figure 1, chaque secteur 1 comportant une pluralité d'aubes fixes 2, reliées par leur extrémité interne à une virole intérieure 3, et par leur extrémité externe à une virole extérieure 4. Le rôle des secteurs de redresseurs est de redresser le flux d'air arrivant de l'amont du moteur afin que ce flux arrive en amont de la roue mobile avec l'angle adéquat.

Les aubes 2 sont définies par deux flancs appelés respectivement intrados 8 et extrados 9 et formant un profil aérodynamique avec un bord d'attaque et un bord de fuite. Le bord d'attaque 6, ou BA, est formé par le raccordement amont entre l'intrados et l'extrados. Le bord de fuite 7, ou BF, est formé par le raccordement aval entre l'intrados et l'extrados. Ce profil aérodynamique est très important car il permet à l'aube de redresser de la façon voulue le flux d'air arrivant de l'amont de la turbomachine. Ce profil est défini par calcul sous la forme de coupes radiales, effectuées selon l'axe d'empilement de l'aube, noté E sur la figure, à des hauteurs différentes par rapport à l'axe de rotation de la turbomachine. L'aube formée par ces différentes coupes radiales est ensuite intégrée entre les viroles intérieure et extérieure. L'assemblage de l'aube et des viroles peut être ensuite réalisé par brasage.

Pour certains profils aérodynamiques, le rayon de courbure du BF est tellement petit par exemple de l'ordre du dixième de millimètre, que cela entraîne, pendant le fonctionnement du moteur, une augmentation de la contrainte statique dans la brasure réalisée entre l'aube et la virole extérieure, côté intrados, vers le BF. Le niveau de contrainte ainsi atteint peut se révéler rédhibitoire et être à l'origine de fissures apparaissant dans la brasure. Afin que l'aube satisfasse aux exigences aérodynamiques et mécaniques qui lui sont imposées, il est nécessaire de trouver un nouveau profil aérodynamique qui permette de diminuer le niveau de contrainte dans la brasure et qui n'ait pas d'influence néfaste sur les caractéristiques aérodynamiques et mécaniques de l'aube.

L'invention permet de résoudre ce problème en proposant un nouveau profil aérodynamique optimisé d'aube de redresseur.

Ce nouveau profil, obtenu par simulations et itérations entre calculs aérodynamiques et calculs mécaniques, permet de garantir la tenue mécanique du secteur de redresseurs, et de respecter les exigences aérodynamiques liées au redressement du flux d'air. De plus, ce nouveau type de redresseur est parfaitement interchangeable avec un ancien redresseur sans impacter les interfaces entre les pièces environnant le redresseur.

Plus particulièrement, l'invention concerne une aube de redresseur de turbomachine, l'aube comportant un profil aérodynamique et un axe d'empilement E, la turbomachine ayant un axe de rotation R, l'aube étant remarquable en ce qu'elle est constituée d'une pluralité de coupes radiales effectuées orthogonalement à son axe d'empilement E, chaque coupe radiale étant composée de points dont les coordonnées cartésiennes X, Y et Z sont telles que définies dans le Tableau 1, la coordonnée Z correspondant à la distance entre une coupe radiale considérée et l'axe de rotation de la turbomachine R, X et Y correspondant aux coordonnées dans le plan comprenant la coupe considérée des points formant cette coupe, l'axe des X étant parallèle à l'axe de rotation de la turbomachine R, les valeurs de X étant croissantes dans le sens d'écoulement des gaz de la turbomachine, l'origine de l'axe des X étant située à son intersection avec l'axe Z, l'axe des Y étant tel que le repère (X, Y, Z) soit un repère orthogonal direct.

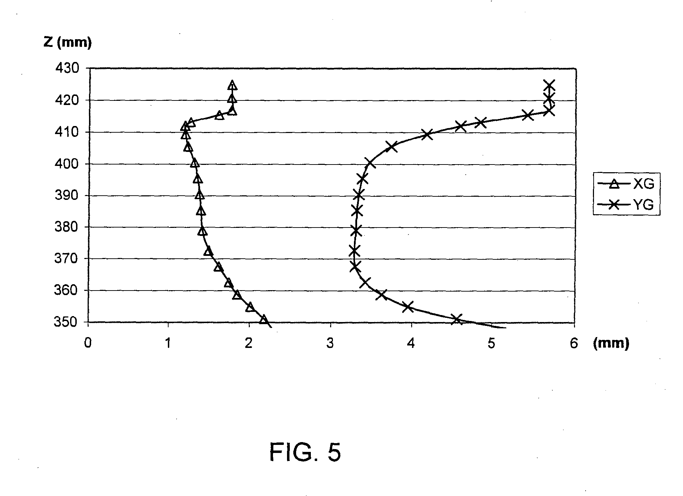

Selon un mode de réalisation de l'invention, chaque coupe radiale comporte un centre de gravité dont les coordonnées cartésiennes X et Y sont données par la figure 5.

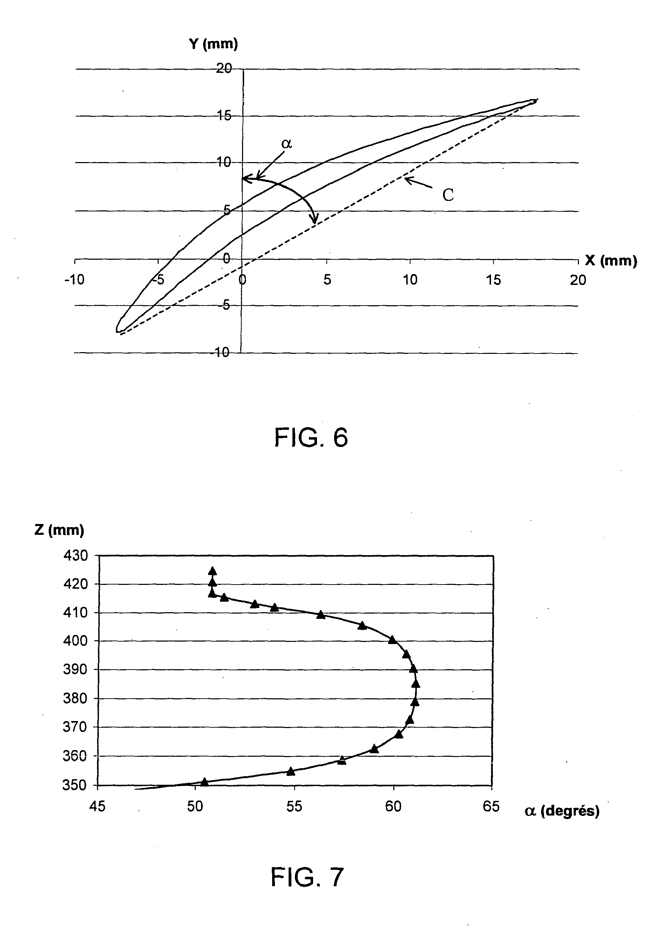

Préférentiellement, chaque coupe radiale comporte un bord d'attaque et un bord de fuite, la valeur de l'angle direct formé par la droite reliant le bord d'attaque au bord de fuite et l'axe des Y suivant la courbe donnée à la figure 7.

L'invention concerne par ailleurs un secteur de redresseurs comprenant une virole interne, une virole externe et muni d'au moins une telle aube. Elle concerne aussi un étage de compression, un compresseur, ainsi qu'une turbomachine munis d'au moins un tel secteur de redresseurs.

L'invention sera mieux comprise et d'autres avantages de celle-ci apparaîtront plus clairement à la lumière de la description qui va suivre d'un mode préféré de réalisation, donnée à titre d'exemple non limitatif et faite en référence aux dessins annexés, dans lesquels :
- la figure 1 est une vue en perspective d'un secteur de redresseur, vu de l'amont, selon l'art antérieur ;
- la figure 2 est une vue schématique en coupe d'une turbomachine et plus précisément d'un turboréacteur d'avion;
- la figure 3 est une vue en coupe d'un secteur de redresseur, selon un plan comprenant l'axe X de rotation de la turbomachine, selon l'invention ;
- la figure 4 est une vue de détail d'un redresseur selon l'invention, vu de l'intrados ;
- la figure 5 est un graphique en deux dimensions représentant les coordonnées XG et YG des centres de gravité des différentes coupes radiales constitutives d'une aube selon l'invention;
- la figure 6 est une vue de dessus d'une coupe radiale selon l'axe A-A d'une aube selon invention, placée dans le repère (X, Y, Z) ;
- la figure 7 est un graphique en deux dimensions représentant la valeur du calage en degrés d'une aube selon l'invention, pour les différentes coupes radiales constitutives de l'aube.

La figure 1, déjà décrite, montre, vu de l'amont, un secteur de redresseurs 1 comportant une pluralité d'aubes 2.

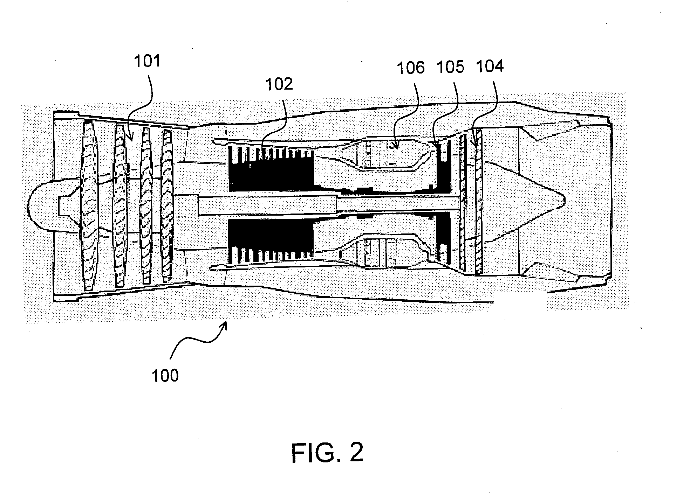

La figure 2 montre en coupe une vue d'ensemble d'une turbomachine 100, par exemple un turboréacteur d'avion, comprenant un compresseur basse pression 101, un compresseur haute pression 102, une turbine basse pression 104, une turbine haute pression 105 et une chambre de combustion 106.

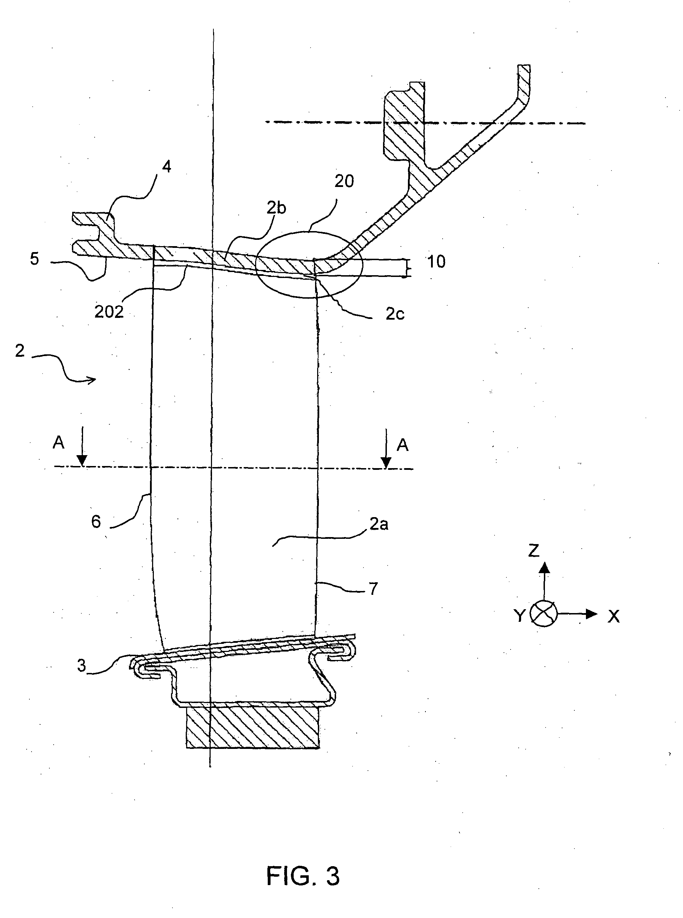

La figure 3 montre un secteur de redresseur selon l'invention, vu en coupe selon un plan comprenant l'axe R de rotation de la turbomachine.

L'aube 2 est composée d'une partie radialement externe 10 et d'une partie radialement interne 2a. La partie radialement externe 10, appelée aussi tête de l'aube, se décompose en une partie de liaison 2b et une partie intermédiaire 2c.

L'aube 2 est encastrée radialement dans la virole extérieure 4 par l'intermédiaire de sa partie radialement externe 10, et plus précisément grâce à sa partie de liaison 2b. Dans l'exemple illustré ici, la partie radialement externe 10 est un cylindre dont les génératrices sont parallèles à l'axe d'empilement E de l'aube 2. La surface 202 correspond à la limite entre les parties radialement interne 2a et externe 10 de l'aube.

L'aube 2 et la virole extérieure 4 sont assemblées par brasage, la brasure étant réalisée entre la virole extérieure 4 et la partie de liaison 2b de l'aube. Lorsque le rayon de courbure du bord de fuite 7 est très petit, par exemple de l'ordre de 0,2 mm, une surcontrainte locale peut apparaître dans la brasure côté intrados, vers le BF, et être à l'origine de fissures. La zone où se situe cette éventuelle surcontrainte correspond au repère 20. Dans cette zone, un aménagement particulier de la forme de l'aube est réalisé, afin de répondre aux exigences de tenue mécanique dans la brasure et au niveau de l'aube.

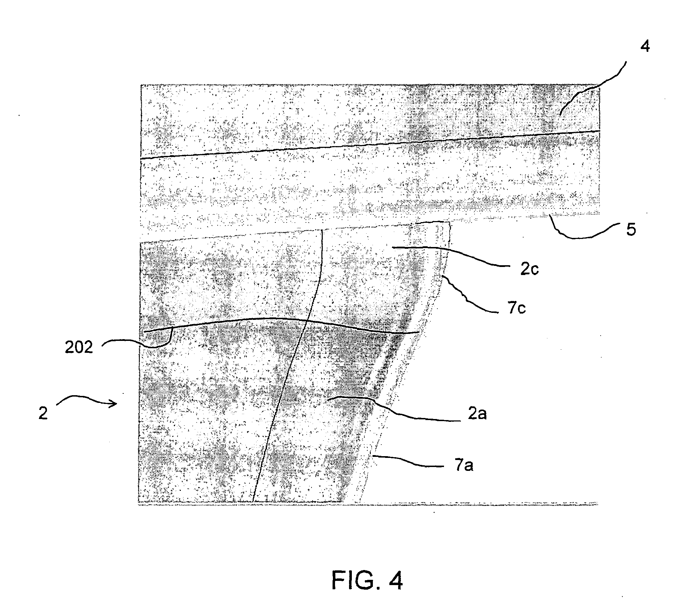

La figure 4 montre une vue de détail côté intrados, de la zone 20 d'une aube 2 conforme à l'invention.

La partie radialement interne 2a de l'aube 2 a un rayon de courbure du BF 7a, raccordant l'intrados 8 à l'extrados 9, qui est quasiment constant de la virole intérieure 3 jusqu'à la surface de coupure 202.

Au-delà, le rayon de courbure du BF 7c est évolutif. II augmente en partant d'une valeur identique au rayon 7a, jusqu'à une valeur pouvant être égale au triple de la valeur du rayon 7a, cette valeur étant un maximum au-delà duquel l'effet sur le niveau et la localisation de la surcontrainte n'est plus significatif.

De plus, l'augmentation du rayon de courbure au BF s'accompagne d'une augmentation de l'épaisseur de l'aube. Cette augmentation peut être réalisée sur toute la longueur de corde de l'aube, mais généralement, seule une partie aval de l'aube a une épaisseur augmentée. La longueur de corde est la longueur de la ligne joignant le bord d'attaque et le bord de fuite de l'aube, pour une coupe radiale donnée. Préférentiellement, la partie ayant son épaisseur augmentée représente au maximum un tiers de la longueur de corde pour une coupe radiale considérée. L'augmentation d'épaisseur de la coupe est progressive de façon à ce qu'aucune irrégularité de forme ou protubérance ne perturbe l'écoulement de l'air le long de l'intrados.

Enfin, dans la partie de liaison 2b, le rayon de courbure au BF est identique au rayon de courbure de la partie intermédiaire 2c.

Pour définir la forme de l'aube correspondant à l'invention et satisfaisant aux différentes exigences précédemment évoquées, à savoir des exigences de qualité de redressement du flux d'air et de tenue mécanique, il n'existe qu'un ensemble de lieux géométriques optimum. Cet ensemble de lieux géométriques est déterminé par itérations entre des calculs aérodynamiques et mécaniques et définit l'intégralité de la forme de l'aube 2 entre les viroles intérieure 3 et extérieure 4.

Cet ensemble de lieux géométriques est représenté sous la forme de coupes radiales effectuées à des hauteurs prises par rapport à l'axe de rotation R de la turbomachine différentes et orthogonalement à l'axe d'empilement E de l'aube 2. Chaque coupe radiale est elle-même définie par son centre de gravité G et par un ensemble de 99 points. Le centre de gravité et chaque point de chaque coupe radiale sont repérés par leurs coordonnées X et Y données dans un repère (X, Y, Z) orthogonal direct. Pour chacune des différentes coupes radiales, l'ensemble des coordonnées cartésiennes des centres de gravité est donné à la figure 5, et l'ensemble des coordonnées cartésiennes de leurs points est donné ci-dessous dans le Tableau 1. Les valeurs des coordonnées X, Y et Z sont données en milimètre.

L'axe Z du repère correspond à l'axe d'empilement E de l'aube 2, les valeurs des coordonnées Z étant croissantes en s'éloignant de l'axe R et son origine étant située à son intersection avec l'axe R. L'axe X est parallèle à l'axe R, les X étant croissants vers l'aval de la turbomachine, son origine étant située à son intersection avec l'axe Z, c'est à dire avec l'axe d'empilement E. La direction et le sens de !'axe Y sont obtenues naturellement du fait que le repère (X, Y, Z) soit un repère orthogonal direct, l'origine de l'axe Y étant située à son intersection avec l'axe d'empilement E.

La figure 5 est un graphique donnant, pour chaque valeur de Z définissant l'aube 2, les coordonnées XG et YG du centre de gravité de la coupe radiale correspondante. Ce graphique comporte deux courbes : celle de gauche correspond aux valeurs des coordonnées XG des centres de gravité, celle de droite aux valeurs des coordonnées YG.

**TABLEAU 1 Coordonnées X et Y par coupe radiale**

| **Coupe radiale 00** | | | | | | | | |
|---|---|---|---|---|---|---|---|---|
| **X** | **Y** | **Z** | **X** | **Y** | **Z** | **X** | **Y** | **Z** |
| -7,39 | -7,80 | 347,38 | 17,06 | 16,66 | 347,38 | -3,02 | -1,58 | 347,38 |
| -7,40 | -7,80 | 347,38 | 17,15 | 16,70 | 347,38 | -3,73 | -2,64 | 347,38 |
| -7,41 | -7,79 | 347,38 | 17,23 | 16,73 | 347,38 | -4,38 | -3,62 | 347,38 |
| -7,42 | -7,77 | 347,38 | 17,30 | 16,73 | 347,38 | -4,95 | -4,50 | 347,38 |
| -7,44 | -7,75 | 347,38 | 17,35 | 16,71 | 347,38 | -5,46 | -5,29 | 347,38 |
| -7,45 | -7,71 | 347,38 | 17,38 | 16,68 | 347,38 | -5,90 | -5,96 | 347,38 |
| -7,46 | -7,65 | 347,38 | 17,41 | 16,66 | 347,38 | -6,28 | -6,53 | 347,38 |
| -7,46 | -7,58 | 347,38 | 17,42 | 16,64 | 347,38 | -6,60 | -6,99 | 347,38 |
| -7,45 | -7,50 | 347,38 | 17,43 | 16,63 | 347,38 | -6,85 | -7,35 | 347,38 |
| -7,44 | -7,40 | 347,38 | 17,43 | 16,62 | 347,38 | -7,05 | -7,60 | 347,38 |
| -7,36 | -7,08 | 347,38 | 17,44 | 16,61 | 347,38 | -7,12 | -7,67 | 347,38 |
| -7,23 | -6,65 | 347,38 | 17,44 | 16,60 | 347,38 | -7,17 | -7,72 | 347,38 |
| -7,04 | -6,11 | 347,38 | 17,45 | 16,58 | 347,38 | -7,23 | -7,77 | 347,38 |
| -6,79 | -5,45 | 347,38 | 17,45 | 16,55 | 347,38 | -7,27 | -7,79 | 347,38 |
| -6,48 | -4,68 | 347,38 | 17,45 | 16,51 | 347,38 | -7,31 | -7,81 | 347,38 |
| -6,09 | -3,79 | 347,38 | 17,44 | 16,45 | 347,38 | -7,34 | -7,81 | 347,38 |
| -5,63 | -2,81 | 347,38 | 17,40 | 16,40 | 347,38 | -7,36 | -7,81 | 347,38 |
| -5,08 | -1,73 | 347,38 | 17,34 | 16,35 | 347,38 | -7,38 | -7,81 | 347,38 |
| -4,46 | -0,57 | 347,38 | 17,25 | 16,30 | 347,38 | -7,39 | -7,80 | 347,38 |
| -3,74 | 0,65 | 347,38 | 16,97 | 16,15 | 347,38 | | | |
| -2,93 | 1,91 | 347,38 | 16,59 | 15,94 | 347,38 | | | |
| -2,03 | 3,20 | 347,38 | 16,11 | 15,66 | 347,38 | | | |
| -1,03 | 4,49 | 347,38 | 15,52 | 15,32 | 347,38 | | | |
| 0,06 | 5,76 | 347,38 | 14,82 | 14,91 | 347,38 | | | |
| 1,23 | 6,99 | 347,38 | 14,02 | 14,42 | 347,38 | | | |
| 2,47 | 8,16 | 347,38 | 13,13 | 13,85 | 347,38 | | | |
| 3,76 | 9,25 | 347,38 | 12,15 | 13,22 | 347,38 | | | |
| 5,10 | 10,26 | 347,38 | 11,09 | 12,50 | 347,38 | | | |
| 6,44 | 11,18 | 347,38 | 9,97 | 11, 71 | 347,38 | | | |
| 7,78 | 12,01 | 347,38 | 8,80 | 10,85 | 347,38 | | | |
| 9,08 | 12,76 | 347,38 | 7,60 | 9,91 | 347,38 | | | |
| 10,32 | 13,43 | 347,38 | 6,38 | 8,90 | 347,38 | | | |
| 11,50 | 14,03 | 347,38 | 5,16 | 7,83 | 347,38 | | | |
| 12,58 | 14,56 347,38 | | 3,96 | 6,70 | 347,38 | | | |
| 13,56 | 15,03 | 347,38 | 2,78 | 5,54 | 347,38 | | | |
| 14,44 | 15,43 | 347,38 | 1,65 | 4,35 | 347,38 | | | |
| 15,19 | 15,78 | 347,38 | 0,57 | 3,14 | 347,38 | | | |
| 15,83 | 16,08 | 347,38 | -0,44 | 1,92 | 347,38 | | | |
| 16,35 | 16,32 | 347,38 | -1,37 | 0,72 | 347,38 | | | |
| 16,76 | 16,51 | 347,38 | -2,23 | -0,46 | 347,38 | | | |

| **Coupe radiale 03** | | | | | | | | |
|---|---|---|---|---|---|---|---|---|
| **X** | **Y** | **Z** | **X** | **Y** | **Z** | **X** | **Y** | **Z** |
| -8,33 | -7,10 | 351,17 | 17,30 | 14,41 | 351,17 | -3,51 | -1,56 | 351,17 |
| -8,33 | -7,09 | 351,17 | 17,39 | 14,44 | 351,17 | -4,31 | -2,50 | 351,17 |
| -8,34 | -7,08 | 351,17 | 17,47 | 14,46 | 351,17 | -5,04 | -3,37 | 351,17 |
| -8,36 | -7,07 | 351,17 | 17,54 | 14,45 | 351,17 | -5,68 | -4,16 | 351,17 |
| -8,37 | -7,04 | 351,17 | 17,59 | 14,43 | 351,17 | -6,24 | -4,86 | 351,17 |
| -8,39 | -7,00 | 351,17 | 17,62 | 14,41 | 351,17 | -6,73 | -5,47 | 351,17 |
| -8,39 | -6,94 | 351,17 | 17,64 | 14,38 | 351,17 | -7,15 | -5,98 | 351,17 |
| -8,39 | -6,88 | 351,17 | 17,65 | 14,36 | 351,17 | -7,49 | -6,39 | 351,17 |
| -8,38 | -6,80 | 351,17 | 17,66 | 14,35 | 351,17 | -7,76 | -6,71 | 351,17 |
| -8,36 | -6,70 | 351,17 | 17,67 | 14,34 | 351,17 | -7,98 | -6,94 | 351,17 |
| -8,26 | -6,40 | 351,17 | 17,67 | 14,34 | 351,17 | -8,05 | -7,00 | 351,17 |
| -8,11 | -5,99 | 351,17 | 17,67 | 14,32 | 351,17 | -8,11 | -7,04 | 351,17 |
| -7,89 | -5,49 | 351,17 | 17,68 | 14,30 | 351,17 | -8,17 | -7,08 | 351,17 |
| -7,60 | -4,87 | 351,17 | 17,68 | 14,27 | 351,17 | -8,21 | -7,10 | 351,17 |
| -7,24 | -4,15 | 351,17 | 17,68 | 14,23 | 351,17 | -8,25 | -7,11 | 351,17 |
| -6,79 | -3,33 | 351,17 | 17,67 | 14,18 | 351,17 | -8,28 | -7,11 | 351,17 |
| -6,26 | -2,43 | 351,17 | 17,63 | 14,13 | 351,17 | -8,30 | -7,10 | 351,17 |
| -5,64 | -1,45 | 351,17 | 17,57 | 14,08 | 351,17 | -8,32 | -7,10 | 351,17 |
| -4,92 | -0,40 | 351,17 | 17,49 | 14,04 | 351,17 | -8,33 | -7,10 | 351,17 |
| -4,10 | 0,70 | 351,17 | 17,21 | 13,90 | 351,17 | | | |
| -3,20 | 1,83 | 351,17 | 16,83 | 13,72 | 351,17 | | | |
| -2,19 | 2,96 | 351,17 | 16,35 | 13,48 | 351,17 | | | |
| -1,10 | 4,10 | 351,17 | 15,77 | 13,18 | 351,17 | | | |
| 0,08 | 5,20 | 351,17 | 15,08 | 12,81 | 351,17 | | | |
| 1,33 | 6,26 | 351,17 | 14,29 | 12,38 | 351,17 | | | |
| 2,63 | 7,26 | 351,17 | 13,40 | 11,88 | 351,17 | | | |
| 3,98 | 8,19 | 351,17 | 12,42 | 11,31 | 351,17 | | | |
| 5,36 | 9,03 | 351,17 | 11,36 | 10,68 | 351,17 | | | |
| 6,73 | 9,80 | 351,17 | 10,23 | 9,99 | 351,17 | | | |
| 8,08 | 10,49 | 351,17 | 9,05 | 9,24 | 351,17 | | | |
| 9,39 | 11,12 | 351,17 | 7,82 | 8,42 | 351,17 | | | |
| 10,63 | 11,68 | 351,17 | 6,57 | 7,55 | 351,17 | | | |
| 11,80 | 12,18 | 351,17 | 5,31 | 6,63 | 351,17 | | | |
| 12,88 | 12,62 | 351,17 | 4,05 | 5,66 | 351,17 | | | |
| 13,85 | 13,02 | 351,17 | 2,81 | 4,65 | 351,17 | | | |
| 14,72 | 13,36 | 351,17 | 1,60 | 3,62 | 351,17 | | | |
| 15,47 | 13,66 | 351,17 | 0,45 | 2,57 | 351,17 | | | |
| 16,10 | 13,91 | 351,17 | -0,65 | 1,51 | 351,17 | | | |
| 16,61 | 14,12 | 351,17 | -1,68 | 0,46 | 351,17 | | | |
| 17,01 | 14,28 | 351,17 | -2,64 | -0,57 | 351,17 | | | |

| **Coupe radiale 07** | | | | | | | | |
|---|---|---|---|---|---|---|---|---|
| **X** | **Y** | **Z** | **X** | **Y** | **Z** | **X** | **Y** | **Z** |
| -9,11 | -6,63 | 354,97 | 17,52 | 12,49 | 354,97 | -4,00 | -1,58 | 354,97 |
| -9,12 | -6,62 | 354,97 | 17,61 | 12,52 | 354,97 | -4,86 | -2,43 | 354,97 |
| -9,13 | -6,61 | 354,97 | 17,68 | 12,53 | 354,97 | -5,63 | -3,22 | 354,97 |
| -9,14 | -6,60 | 354,97 | 17,75 | 12,52 | 354,97 | -6,32 | -3,95 | 354,97 |
| -9,16 | -6,57 | 354,97 | 17,80 | 12,49 | 354,97 | -6,92 | -4,60 | 354,97 |
| -9,17 | -6,53 | 354,97 | 17,83 | 12,47 | 354,97 | -7,44 | -5,15 | 354,97 |
| -9,17 | -6,48 | 354,97 | 17,84 | 12,44 | 354,97 | -7,88 | -5,62 | 354,97 |
| -9,17 | -6,41 | 354,97 | 17,85 | 12,42 | 354,97 | -8,25 | -6,00 | 354,97 |
| -9,15 | -6,33 | 354,97 | 17,86 | 12,41 | 354,97 | -8,54 | -6,30 | 354,97 |
| -9,13 | -6,24 | 354,97 | 17,86 | 12,40 | 354,97 | -8,76 | -6,50 | 354,97 |
| -9,02 | -5,95 | 354,97 | 17,87 | 12,39 | 354,97 | -8,83 | -6,55 | 354,97 |
| -8,85 | -5,56 | 354,97 | 17,87 | 12,38 | 354,97 | -8,90 | -6,59 | 354,97 |
| -8,61 | -5,08 | 354,97 | 17,87 | 12,36 | 354,97 | -8,95 | -6,62 | 354,97 |
| -8,29 | -4,49 | 354,97 | 17,88 | 12,33 | 354,97 | -9,00 | -6,64 | 354,97 |
| -7,89 | -3,81 | 354,97 | 17,87 | 12,29 | 354,97 | -9,04 | -6,65 | 354,97 |
| -7,40 | -3,04 | 354,97 | 17,86 | 12,24 | 354,97 | -9,07 | -6,64 | 354,97 |
| -6,82 | -2,19 | 354,97 | 17,82 | 12,19 | 354,97 | -9,09 | -6,64 | 354,97 |
| -6,14 | -1,27 | 354,97 | 17,76 | 12,14 | 354,97 | -9,10 | -6,63 | 354,97 |
| -5,37 | -0,29 | 354,97 | 17,67 | 12,11 | 354,97 | -9,11 | -6,63 | 354,97 |
| -4,49 | 0,71 | 354,97 | 17,39 | 11,99 | 354,97 | | | |
| -3,51 | 1,74 | 354,97 | 17,02 | 11,83 | 354,97 | | | |
| -2,43 | 2,77 | 354,97 | 16,53 | 11,63 | 354,97 | | | |
| -1,27 | 3,78 | 354,97 | 15,94 | 11,37 | 354,97 | | | |
| -0,02 | 4,76 | 354,97 | 15,25 | 11,05 | 354,97 | | | |
| 1,29 | 5,69 | 354,97 | 14,45 | 10,67 | 354,97 | | | |
| 2,65 | 6,55 | 354,97 | 13,55 | 10,23 | 354,97 | | | |
| 4,05 | 7,35 | 354,97 | 12,56 | 9,74 | 354,97 | | | |
| 5,46 | 8,06 | 354,97 | 11,49 | 9,19 | 354,97 | | | |
| 6,86 | 8,70 | 354,97 | 10,34 | 8,59 | 354,97 | | | |
| 8,23 | 9,28 | 354,97 | 9,14 | 7,93 | 354,97 | | | |
| 9,56 | 9,79 | 354,97 | 7,88 | 7,22 | 354,97 | | | |
| 10,81 | 10,25 | 354,97 | 6,59 | 6,46 | 354,97 | | | |
| 11,99 | 10,66 | 354,97 | 5,29 | 5,66 | 354,97 | | | |
| 13,07 | 11,03 | 354,97 | 3,99 | 4,81 | 354,97 | | | |
| 14,05 | 11,35 | 354,97 | 2,70 | 3,93 | 354,97 | | | |
| 14,92 | 11,63 | 354,97 | 1,43 | 3,03 | 354,97 | | | |
| 15,67 | 11,88 | 354,97 | 0,21 | 2,10 | 354,97 | | | |
| 16,30 | 12,08 | 354,97 | -0,95 | 1,17 | 354,97 | | | |
| 16,82 | 12,26 | 354,97 | -2,05 | 0,23 | 354,97 | | | |
| 17,22 | 12,39 | 354,97 | -3,07 | -0,69 | 354,97 | | | |

| **Coupe radiale 10** | | | | | | | | |
|---|---|---|---|---|---|---|---|---|
| **X** | **Y** | **Z** | **X** | **Y** | **Z** | **X** | **Y** | **Z** |
| -9,64 | -6,31 | 358,77 | 17,63 | 11,46 | 358,77 | -4,32 | -1,57 | 358,77 |
| -9,64 | -6,30 | 358,77 | 17,72 | 11,49 | 358,77 | -5,21 | -2,37 | 358,77 |
| -9,65 | -6,29 | 358,77 | 17,80 | 11,49 | 358,77 | -6,02 | -3,11 | 358,77 |
| -9,67 | -6,28 | 358,77 | 17,86 | 11,48 | 358,77 | -6,73 | -3,80 | 358,77 |
| -9,68 | -6,25 | 358,77. | 17,91 | 11,45 | 358,77 | -7,36 | -4,41 | 358,77 |
| -9,69 | -6,21 | 358,77 | 17,93 | 11,42 | 358,77 | -7,91 | -4,94 | 358,77 |
| -9,69 | -6,16 | 358,77 | 17,95 | 11,40 | 358,77 | -8,37 | -5,38 | 358,77 |
| -9,69 | -6,09 | 358,77 | 17,96 | 11,38 | 358,77 | -8,75 | -5,74 | 358,77 |
| -9,67 | -6,02 | 358,77 | 17,97 | 11,37 | 358,77 | -9,05 | -6,01 | 358,77 |
| -9,64 | -5,93 | 358,77 | 17,97 | 11,36 | 358,77 | -9,28 | -6,20 | 358,77 |
| -9,53 | -5,64 | 358,77 | 17,97 | 11,35 | 358,77 | -9,36 | -6,25 | 358,77 |
| -9,34 | -5,26 | 358,77 | 17,98 | 11,34 | 358,77 | -9,42 | -6,29 | 358,77 |
| -9,08 | -4,79 | 358,77 | 17,98 | 11,32 | 358,77 | -9,48 | -6,32 | 358,77 |
| -8,75 | -4,22 | 358,77 | 17,98 | 11,29 | 358,77 | -9,53 | -6,33 | 358,77 |
| -8,33 | -3,56 | 358,77 | 17,98 | 11,25 | 358,77 | -9,57 | -6,33 | 358,77 |
| -7,81 | -2,81 | 358,77 | 17,96 | 11,20 | 358,77 | -9,60 | -6,33 | 358,77 |
| -7,19 | -1,99 | 358,77 | 17,92 | 11,15 | 358,77 | -9,62 | -6,32 | 358,77 |
| -6,48 | -1,11 | 358,77 | 17,86 | 11,11 | 358,77 | -9,63 | -6,31 | 358,77 |
| -5,66 | -0,99 | 358,77 | 17,77 | 11,08 | 358,77 | -9,64 | -6,31 | 358,77 |
| -4,74 | 0,77 | 358,77 | 17,49 | 10,97 | 358,77 | | | |
| -3,72 | 1,75 | 358,77 | 17,11 | 10,83 | 358,77 | | | |
| -2,60 | 2,71 | 358,77 | 16,62 | 10,64 | 358,77 | | | |
| -1,40 | 3,65 | 358,77 | 16,03 | 10,40 | 358,77 | | | |
| -0,11 | 4,56 | 358,77 | 15,33 | 10,11 | 358,77 | | | |
| 1,24 | 5,41 | 358,77 | 14,53 | 9,76 | 358,77 | | | |
| 2,63 | 6,20 | 358,77 | 13,62 | 9,36 | 358,77 | | | |
| 4,05 | 6,91 | 358,77 | 12,62 | 8,90 | 358,77 | | | |
| 5,49 | 7,56 | 358,77 | 11,54 | 8,40 | 358,77 | | | |
| 6,91 | 8,13 | 358,77 | 10,38 | 7,84 | 358,77 | | | |
| 8,29 | 8,64 | 358,77 | 9,16 | 7,23 | 358,77 | | | |
| 9,63 | 9,10 | 358,77 | 7,89 | 6,58 | 358,77 | | | |
| 10,89 | 9,50 | 358,77 | 6,58 | 5,88 | 358,77 | | | |
| 12,08 | 9,86 | 358,77 | 5,26 | 5,14 | 358,77 | | | |
| 13,16 | 10,18 | 358,77 | 3,93 | 4,36 | 358,77 | | | |
| 14,15 | 10,46 | 358,77 | 2,60 | 3,55 | 358,77 | | | |
| 15,02 | 10,70 | 358,77 | 1,31 | 2,71 | 358,77 | | | |
| 15,78 | 10,92 | 358,77 | 0,05 | 1,86 | 358,77 | | | |
| 16,41 | 11,10 | 358,77 | -1,15 | 0,99 | 358,77 | | | |
| 16,93 | 11,25 | 358,77 | -2,29 | 0,13 | 358,77 | | | |
| 17,33 | 11,37 | 358,77 | -3,35 | -0,74 | 358,77 | | | |

| **Coupe radiale 16** | | | | | | | | |
|---|---|---|---|---|---|---|---|---|
| **X** | **Y** | **Z** | **X** | **Y** | **Z** | **X** | **Y** | **Z** |
| -9,96 | -6,08 | 362,57 | 17,69 | 10,85 | 362,57 | -4,50 | -1,56 | 362,57 |
| -9,97 | -6,07 | 362,57 | 17,78 | 10,87 | 362,57 | -5,42 | -2,32 | 362,57 |
| -9,98 | -6,07 | 362,57 | 17,86 | 10,88 | 362,57 | -6,25 | -3,03 | 362,57 |
| -9,99 | -6,05 | 362,57 | 17,93 | 10,86 | 362,57 | -6,99 | -3,69 | 362,57 |
| -10,01 | -6,02 | 362,57 | 17,97 | 10,84 | 362,57 | -7,63 | -4,27 | 362,57 |
| -10,02 | -5,98 | 362,57 | 18,00 | 10,81 | 362,57 | -8,19 | -4,78 | 362,57 |
| -10,02 | -5,93 | 362,57 | 18,02 | 10,78 | 362,57 | -8,67 | -5,20 | 362,57 |
| -10,01 | -5,86 | 362,57 | 18,02 | 10,76 | 362,57 | -9,06 | -5,55 | 362,57 |
| -9,99 | -5,79 | 362,57 | 18,03 | 10,75 | 362,57 | -9,36 | -5,81 | 362,57 |
| -9,97 | -5,70 | 362,57 | 18,03 | 10,74 | 362,57 | -9,60 | -5,99 | 362,57 |
| -9,85 | -5,41 | 362,57 | 18,03 | 10,73 | 362,57 | -9,68 | -6,04 | 362,57 |
| -9,66 | -5,04 | 362,57 | 18,04 | 10,72 | 362,57 | -9,75 | -6,07 | 362,57 |
| -9,39 | -4,58 | 362,57 | 18,04 | 10,70 | 362,57 | -9,81 | -6,09 | 362,57 |
| -9,04 | -4,02 | 362,57 | 18,04 | 10,67 | 362,57 | -9,86 | -6,11 | 362,57 |
| -8,60 | -3,37 | 362,57 | 18,04 | 10,63 | 362,57 | -9,90 | -6,11 | 362,57 |
| -8,06 | -2,64 | 362,57 | 18,02 | 10,58 | 362,57 | -9,92 | -6,10 | 362,57 |
| -7,43 | -1,85 | 362,57 | 17,98 | 10,53 | 362,57 | -9,94 | -6,09 | 362,57 |
| -6,69 | -0,99 | 362,57 | 17,92 | 10,49 | 362,57 | -9,95 | -6,09 | 362,57 |
| -5,85 | -0,10 | 362,57 | 17,83 | 10,46 | 362,57 | -9,96 | -6,08 | 362,57 |
| -4,90 | 0,83 | 362,57 | 17,55 | 10,36 | 362,57 | | | |
| -3,85 | 1,76 | 362,57 | 17,17 | 10,22 | 362,57 | | | |
| -2,70 | 2,69 | 362,57 | 16,68 | 10,04 | 362,57 | | | |
| -1,47 | 3,58 | 362,57 | 16,09 | 9,82 | 362,57 | | | |
| -0,16 | 4,44 | 362,57 | 15,38 | 9,54 | 362,57 | | | |
| 1,21 | 5,25 | 362,57 | 14,58 | 9,21 | 362,57 | | | |
| 2,62 | 5,98 | 362,57 | 13,67 | 8,82 | 362,57 | | | |
| 4,06 | 6,65 | 362,57 | 12,67 | 8,39 | 362,57 | | | |
| 5,51 | 7,25 | 362,57 | 11,58 | 7,91 | 362,57 | | | |
| 6,94 | 7,78 | 362,57 | 10,41 | 7,37 | 362,57 | | | |
| 8,33 | 8,25 | 362,57 | 9,18 | 6,80 | 362,57 | | | |
| 9,67 | 8,67 | 362,57 | 7,90 | 6,17 | 362,57 | | | |
| 10,94 | 9,04 | 362,57 | 6,59 | 5,51 | 362,57 | | | |
| 12,13 | 9,37 | 362,57 | 5,25 | 4,80 | 362,57 | | | |
| 13,22 | 9,67 | 362,57 | 3,90 | 4,07 | 362,57 | | | |
| 14,21 | 9,92 | 362,57 | 2,56 | 3,30 | 362,57 | | | |
| 15,08 | 10,15 | 362,57 | 1,25 | 2,51 | 362,57 | | | |
| 15,84 | 10,35 | 362,57 | -0,03 | 1,70 | 362,57 | | | |
| 16,47 | 10,51 | 362,57 | -1,26 | 0,88 | 362,57 | | | |
| 16,99 | 10,66 | 362,57 | -2,42 | 0,05 | 362,57 | | | |
| 17,40 | 10,77 | 362,57 | -3,50 | -0,76 | 362,57 | | | |

| **Coupe radiale 24** | | | | | | | | |
|---|---|---|---|---|---|---|---|---|
| **X** | **Y** | **Z** | **X** | **Y** | **Z** | **X** | **Y** | **Z** |
| -10,27 | -5,90 | 367,63 | 17,74 | 10,43 | 367,63 | -4,69 | -1,54 | 367,63 |
| -10,27 | -5,89 | 367,63 | 17,83 | 10,45 | 367,63 | -5,63 | -2,27 | 367,63 |
| -10,28 | -5,88 | 367,63 | 17,91 | 10,45 | 367,63 | -6,47 | -2,96 | 367,63 |
| -10,29 | -5,87 | 367,63 | 17,97 | 10,43 | 367,63 | -7,23 | -3,59 | 367,63 |
| -10,31 | -5,84 | 367,63 | 18,02 | 10,41 | 367,63 | -7,89 | -4,16 | 367,63 |
| -10,32 | -5,80 | 367,63 | 18,04 | 10,38 | 367,63 | -8,46 | -4,65 | 367,63 |
| -10,32 | -5,75 | 367,63 | 18,06 | 10,35 | 367,63 | -8,95 | -5,06 | 367,63 |
| -10,32 | -5,68 | 367,63 | 18,07 | 10,33 | 367,63 | -9,34 | -5,40 | 367,63 |
| -10,30 | -5,61 | 367,63 | 18,07 | 10,32 | 367,63 | -9,66 | -5,65 | 367,63 |
| -10,27 | -5,52 | 367,63 | 18,08 | 10,31 | 367,63 | -9,90 | -5,82 | 367,63 |
| -10,15 | -5,23 | 367,63 | 18,08 | 10,30 | 367,63 | -9,98 | -5,87 | 367,63 |
| -9,95 | -4,86 | 367,63 | 18,08 | 10,29 | 367,63 | -10,05 | -5,90 | 367,63 |
| -9,68 | -4,40 | 367,63 | 18,08 | 10,27 | 367,63 | -10,11 | -5,92 | 367,63 |
| -9,32 | -3,85 | 367,63 | 18,08 | 10,24 | 367,63 | -10,16 | -5,93 | 367,63 |
| -8,88 | -3,21 | 367,63 | 18,08 | 10,20 | 367,63 | -10,20 | -5,93 | 367,63 |
| -8,32 | -2,49 | 367,63 | 18,06 | 10,15 | 367,63 | -10,23 | -5,92 | 367,63 |
| -7,67 | -1,71 | 367,63 | 18,02 | 10,10 | 367,63 | -10,25 | -5,91 | 367,63 |
| -6,91 | -0,87 | 367,63 | 17,96 | 10,06 | 367,63 | -10,26 | -5,90 | 367,63 |
| -6,05 | 0,01 | 367,63 | 17,87 | 10,04 | 367,63 | -10,26 | -5,90 | 367,63 |
| -5,08 | 0,91 | 367,63 | 17,59 | 9,94 | 367,63 | | | |
| -4,01 | 1,81 | 367,63 | 17,21 | 9,81 | 367,63 | | | |
| -2,84 | 2,71 | 367,63 | 16,72 | 9,63 | 367,63 | | | |
| -1,58 | 3,57 | 367,63 | 16,12 | 9,41 | 367,63 | | | |
| -0,25 | 4,40 | 367,63 | 15,41 | 9,14 | 367,63 | | | |
| 1,14 | 5,17 | 367,63 | 14,60 | 8,82 | 367,63 | | | |
| 2,57 | 5,87 | 367,63 | 13,69 | 8,45 | 367,63 | | | |
| 4,03 | 6,50 | 367,63 | 12,69 | 8,03 | 367,63 | | | |
| 5,49 | 7,06 | 367,63 | 11,59 | 7,56 | 367,63 | | | |
| 6,93 | 7,56 | 367,63 | 10,42 | 7,05 | 367,63 | | | |
| 8,33 | 8,00 | 367,63 | 9,18 | 6,49 | 367,63 | | | |
| 9,68 | 8,39 | 367,63 | 7,89 | 5,89 | 367,63 | | | |
| 10,96 | 8,74 | 367,63 | 6,57 | 5,25 | 367,63 | | | |
| 12,15 | 9,04 | 367,63 | 5,21 | 4,57 | 367,63 | | | |
| 13,25 | 9,32 | 367,63 | 3,85 | 3,86 | 367,63 | | | |
| 14,24 | 9,56 | 367,63 | 2,50 | 3,13 | 367,63 | | | |
| 15,12 | 9,77 | 367,63 | 1,17 | 2,37 | 367,63 | | | |
| 15,87 | 9,95 | 367,63 | -0,13 | 1,59 | 367,63 | | | |
| 16,51 | 10,11 | 367,63 | -1,38 | 0,80 | 367,63 | | | |
| 17,03 | 10,24 | 367,63 | -2,56 | 0,01 | 367,63 | | | |
| 17,44 | 10,35 | 367,63 | -3,66 | -0,77 | 367,63 | | | |

| **Coupe radiale 31** | | | | | | | | |
|---|---|---|---|---|---|---|---|---|
| **X** | **Y** | **Z** | **X** | **Y** | **Z** | **X** | **Y** | **Z** |
| -10,48 | -5,81 | 372,69 | 17,76 | 10,28 | 372,69 | -4,84 | -1,51 | 372,69 |
| -10,49 | -5,81 | 372,69 | 17,85 | 10,30 | 372,69 | -5,79 | -2,23 | 372,69 |
| -10,50 | -5,80 | 372,69 | 17,92 | 10,30 | 372,69 | -6,65 | -2,91 | 372,69 |
| -10,51 | -5,78 | 372,69 | 17,99 | 10,29 | 372,69 | -7,41 | -3,54 | 372,69 |
| -10,52 | -5,75 | 372,69 | 18,03 | 10,26 | 372,69 | -8,08 | -4,10 | 372,69 |
| -10,53 | -5,71 | 372,69 | 18,06 | 10,23 | 372,69 | -8,66 | -4,59 | 372,69 |
| -10,54 | -5,66 | 372,69 | 18,07 | 10,20 | 372,69 | -9,15 | -5,00 | 372,69 |
| -10,53 | -5,59 | 372,69 | 18,08 | 10,18 | 372,69 | -9,55 | -5,33 | 372,69 |
| -10,52 | -5,52 | 372,69 | 18,09 | 10,17 | 372,69 | -9,87 | -5,58 | 372,69 |
| -10,49 | -5,43 | 372,69 | 18,09 | 10,16 | 372,69 | -10,12 | -5,75 | 372,69 |
| -10,37 | -5,14 | 372,69 | 18,09 | 10,15 | 372,69 | -10,20 | -5,79 | 372,69 |
| -10,17 | -4,77 | 372,69 | 18,10 | 10,14 | 372,69 | -10,27 | -5,82 | 372,69 |
| -9,90 | -4,31 | 372,69 | 18,10 | 10,12 | 372,69 | -10,33 | -5,84 | 372,69 |
| -9,54 | -3,75 | 372,69 | 18,10 | 10,09 | 372,69 | -10,38 | -5,84 | 372,69 |
| -9,09 | -3,11 | 372,69 | 18,09 | 10,05 | 372,69 | -10,42 | -5,84 | 372,69 |
| -8,53 | -2,39 | 372,69 | 18,07 | 10,00 | 372,69 | -10,44 | -5,83 | 372,69 |
| -7,87 | -1,61 | 372,69 | 18,03 | 9,95 | 372,69 | -10,46 | -5,82 | 372,69 |
| -7,11 | -0,78 | 372,69 | 17,97 | 9,91 | 372,69 | -10,47 | -5,82 | 372,69 |
| -6,23 | 0,10 | 372,69 | 17,88 | 9,89 | 372,69 | -10,48 | -5,81 | 372,69 |
| -5,25 | 0,99 | 372,69 | 17,60 | 9,79 | 372,69 | | | |
| -4,17 | 1,89 | 372,69 | 17,21 | 9,66 | 372,69 | | | |
| -2,99 | 2,78 | 372,69 | 16,72 | 9,49 | 372,69 | | | |
| -1,72 | 3,64 | 372,69 | 16,12 | 9,28 | 372,69 | | | |
| -0,37 | 4,45 | 372,69 | 15,41 | 9,01 | 372,69 | | | |
| 1,03 | 5,20 | 372,69 | 14,60 | 8,69 | 372,69 | | | |
| 2,48 | 5,89 | 372,69 | 13,68 | 8,33 | 372,69 | | | |
| 3,95 | 6,51 | 372,69 | 12,67 | 7,91 | 372,69 | | | |
| 5,42 | 7,05 | 372,69 | 11,57 | 7,45 | 372,69 | | | |
| 6,87 | 7,53 | 372,69 | 10,39 | 6,95 | 372,69 | | | |
| 8,28 | 7,96 | 372,69 | 9,15 | 6,40 | 372,69 | | | |
| 9,64 | 8,33 | 372,69 | 7,85 | 5,81 | 372,69 | | | |
| 10,93 | 8,66 | 372,69 | 6,51 | 5,18 | 372,69 | | | |
| 12,13 | 8,96 | 372,69 | 5,15 | 4,51 | 372,69 | | | |
| 13,23 | 9,22 | 372,69 | 3,78 | 3,81 | 372,69 | | | |
| 14,23 | 9,45 | 372,69 | 2,42 | 3,08 | 372,69 | | | |
| 15,11 | 9,65 | 372,69 | 1,07 | 2,34 | 372,69 | | | |
| 15,88 | 9,82 | 372,69 | -0,24 | 1,58 | 372,69 | | | |
| 16,52 | 9,97 | 372,69 | -1,49 | 0,80 | 372,69 | | | |
| 17,04 | 10,10 | 372,69 | -2,69 | 0,02 | 372,69 | | | |
| 17,45 | 10,20 | 372,69 | -3,81 | -0,75 | 372,69 | | | |
| -10,58 | -5,74 | 379,02 | 17,76 | 10,24 | 379,02 | -4,91 | -1,48 | 379,02 |
| -10,59 | -5,73 | 379,02 | 17,85 | 10,26 | 379,02 | -5,86 | -2,20 | 379,02 |
| -10,60 | -5,72 | 379,02 | 17,93 | 10,26 | 379,02 | -6,72 | -2,87 | 379,02 |
| -10,61 | -5,70 | 379,02 | 17,99 | 10,24 | 379,02 | -7,49 | -3,50 | 379,02 |
| -10,62 | -5,68 | 379,02 | 18,04 | 10,21 | 379,02 | -8,16 | -4,06 | 379,02 |
| -10,64 | -5,64 | 379,02 | 18,06 | 10,18 | 379,02 | -8,75 | -4,54 | 379,02 |
| -10,64 | -5,59 | 379,02 | 18,08 | 10,16 | 379,02 | -9,24 | -4,94 | 379,02 |
| -10,64 | -5,52 | 379,02 | 18,09 | 10,14 | 379,02 | -9,65 | -5,27 | 379,02 |
| -10,62 | -5,44 | 379,02 | 18,09 | 10,13 | 379,02 | -9,97 | -5,52 | 379,02 |
| -10,60 | -5,35 | 379,02 | 18,10 | 10,12 | 379,02 | -10,22 | -5,69 | 379,02 |
| -10,48 | -5,07 | 379,02 | 18,10 | 10,11 | 379,02 | -10,30 | -5,73 | 379,02 |
| -10,28 | -4,69 | 379,02 | 18,10 | 10,10 | 379,02 | -10,37 | -5,75 | 379,02 |
| -10,01 | -4,23 | 379,02 | 18,10 | 10,07 | 379,02 | -10,43 | -5,77 | 379,02 |
| -9,65 | -3,67 | 379,02 | 18,10 | 10,05 | 379,02 | -10,48 | -5,78 | 379,02 |
| -9,20 | -3,02 | 379,02 | 18,10 | 10,01 | 379,02 | -10,52 | -5,77 | 379,02 |
| -8,65 | -2,30 | 379,02 | 18,08 | 9,96 | 379,02 | -10,55 | -5,76 | 379,02 |
| -7,99 | -1,52 | 379,02 | 18,04 | 9,91 | 379,02 | -10,56 | -5,75 | 379,02 |
| -7,23 | -0,68 | 379,02 | 17,97 | 9,87 | 379,02 | -10,58 | -5,74 | 379,02 |
| -6,35 | 0,20 | 379,02 | 17,89 | 9,84 | 379,02 | -10,58 | -5,74 | 379,02 |
| -5,36 | 1,09 | 379,02 | 17,60 | 9,75 | 379,02 | | | |
| -4,27 | 1,99 | 379,02 | 17,22 | 9,62 | 379,02 | | | |
| -3,09 | 2,87 | 379,02 | 16,73 | 9,45 | 379,02 | | | |
| -1,81 | 3,72 | 379,02 | 16,12 | 9,23 | 379,02 | | | |
| -0,46 | 4,53 | 379,02 | 15,41 | 8,97 | 379,02 | | | |
| 0,96 | 5,27 | 379,02 | 14,60 | 8,65 | 379,02 | | | |
| 2,41 | 5,95 | 379,02 | 13,68 | 8,29 | 379,02 | | | |
| 3,89 | 6,56 | 379,02 | 12,67 | 7,87 | 379,02 | | | |
| 5,37 | 7,09 | 379,02 | 11,57 | 7,41 | 379,02 | | | |
| 6,83 | 7,56 | 379,02 | 10,39 | 6,91 | 379,02 | | | |
| 8,25 | 7,98 | 379,02 | 9,14 | 6,36 | 379,02 | | | |
| 9,61 | 8,34 | 379,02 | 7,84 | 5,77 | 379,02 | | | |
| 10,91 | 8,66 | 379,02 | 6,50 | 5,14 | 379,02 | | | |
| 12,11 | 8,95 | 379,02 | 5,13 | 4,48 | 379,02 | | | |
| 13,22 | 9,20 | 379,02 | 3,76 | 3,79 | 379,02 | | | |
| 14,22 | 9,42 | 379,02 | 2,39 | 3,07 | 379,02 | | | |
| 15,11 | 9,62 | 379,02 | 1,04 | 2,33 | 379,02 | | | |
| 15,87 | 9,79 | 379,02 | -0,28 | 1,57 | 379,02 | | | |
| 16,52 | 9,94 | 379,02 | -1,54 | 0,81 | 379,02 | | | |
| 17,05 | 10,06 | 379,02 | -2,74 | 0,04 | 379,02 | | | |
| 17,46 | 10,16 | 379,02 | -3,87 | -0,73 | 379,02 | | | |

| **Coupe radiale 50** | | | | | | | | |
|---|---|---|---|---|---|---|---|---|
| **X** | **Y** | **Z** | **X** | **Y** | **Z** | **X** | **Y** | **Z** |
| -10,58 | -5,70 | 385,35 | 17,76 | 10,25 | 385,35 | -4,89 | -1,48 | 385,35 |
| -10,59 | -5,70 | 385,35 | 17,85 | 10,27 | 385,35 | -5,85 | -2,20 | 385,35 |
| -10,60 | -5,69 | 385,35 | 17,93 | 10,27 | 385,35 | -6,71 | -2,87 | 385,35 |
| -10,61 | -5,67 | 385,35 | 17,99 | 10,25 | 385,35 | -7,48 | -3,49 | 385,35 |
| -10,62 | -5,64 | 385,35 | 18,03 | 10,23 | 385,35 | -8,15 | -4,05 | 385,35 |
| -10,64 | -5,60 | 385,35 | 18,06 | 10,19 | 385,35 | -8,74 | -4,53 | 385,35 |
| -10,64 | -5,55 | 385,35 | 18,08 | 10,17 | 385,35 | -9,23 | -4,93 | 385,35 |
| -10,64 | -5,48 | 385,35 | 18,09 | 10,15 | 385,35 | -9,64 | -5,25 | 385,35 |
| -10,63 | -5,41 | 385,35 | 18,09 | 10,14 | 385,35 | -9,96 | -5,50 | 385,35 |
| -10,60 | -5,32 | 385,35 | 18,09 | 10,13 | 385,35 | -10,22 | -5,66 | 385,35 |
| -10,49 | -5,03 | 385,35 | 18,10 | 10,12 | 385,35 | -10,30 | -5,70 | 385,35 |
| -10,30 | -4,65 | 385,35 | 18,10 | 10,11 | 385,35 | -10,37 | -5,73 | 385,35 |
| -10,03 | -4,18 | 385,35 | 18,10 | 10,09 | 385,35 | -10,43 | -5,74 | 385,35 |
| -9,68 | -3,62 | 385,35 | 18,10 | 10,06 | 385,35 | -10,48 | -5,74 | 385,35 |
| -9,23 | -2,97 | 385,35 | 18,10 | 10,02 | 385,35 | -10,52 | -5,73 | 385,35 |
| -8,68 | -2,25 | 385,35 | 18,08 | 9,97 | 385,35 | -10,55 | -5,72 | 385,35 |
| -8,03 | -1,46 | 385,35 | 18,04 | 9,92 | 385,35 | -10,56 | -5,71 | 385,35 |
| -7,26 | -0,62 | 385,35 | 17,97 | 9,88 | 385,35 | -10,57 | -5,71 | 385,35 |
| -6,39 | 0,26 | 385,35 | 17,89 | 9,85 | 385,35 | -10,58 | -5,70 | 385,35 |
| -5,40 | 1,16 | 385,35 | 17,60 | 9,76 | 385,35 | | | |
| -4,31 | 2,06 | 385,35 | 17,22 | 9,63 | 385,35 | | | |
| -3,12 | 2,94 | 385,35 | 16,73 | 9,46 | 385,35 | | | |
| -1,84 | 3,79 | 385,35 | 16,13 | 9,24 | 385,35 | | | |
| -0,49 | 4,59 | 385,35 | 15,42 | 8,97 | 385,35 | | | |
| 0,93 | 5,33 | 385,35 | 14,60 | 8,65 | 385,35 | | | |
| 2,39 | 6,01 | 385,35 | 13,69 | 8,29 | 385,35 | | | |
| 3,87 | 6,61 | 385,35 | 12,68 | 7,87 | 385,35 | | | |
| 5,35 | 7,14 | 385,35 | 11,58 | 7,40 | 385,35 | | | |
| 6,81 | 7,61 | 385,35 | 10,40 | 6,89 | 385,35 | | | |
| 8,24 | 8,02 | 385,35 | 9,16 | 6,34 | 385,35 | | | |
| 9,60 | 8,38 | 385,35 | 7,86 | 5,75 | 385,35 | | | |
| 10,90 | 8,70 | 385,35 | 6,52 | 5,12 | 385,35 | | | |
| 12,10 | 8,98 | 385,35 | 5,16 | 4,45 | 385,35 | | | |
| 13,21 | 9,23 | 385,35 | 3,79 | 3,75 | 385,35 | | | |
| 14,22 | 9,44 | 385,35 | 2,42 | 3,04 | 385,35 | | | |
| 15,10 | 9,64 | 385,35 | 1,07 | 2,30 | 385,35 | | | |
| 15,87 | 9,80 | 385,35 | -0,25 | 1,55 | 385,35 | | | |
| 16,52 | 9,95 | 385,35 | -1,51 | 0,79 | 385,35 | | | |
| 17,04 | 10,08 | 385,35 | -2,72 | 0,02 | 385,35 | | | |
| 17,46 | 10,17 | 385,35 | -3,85 | -0,74 | 385,35 | | | |

| **Coupe radiale 58** | | | | | | | | |
|---|---|---|---|---|---|---|---|---|
| **X** | **Y** | **Z** | **X** | **Y** | **Z** | **X** | **Y** | **Z** |
| -10,58 | -5,71 | 390,42 | 17,75 | 10,32 | 390,42 | -4,88 | -1,51 | 390,42 |
| -10,59 | -5,71 | 390,42 | 17,84 | 10,34 | 390,42 | -5,83 | -2,22 | 390,42 |
| -10,60 | -5,70 | 390,42 | 17,92 | 10,34 | 390,42 | -6,70 | -2,89 | 390,42 |
| -10,61 | -5,68 | 390,42 | 17,98 | 10,32 | 390,42 | -7,47 | -3,51 | 390,42 |
| -10,62 | -5,65 | 390,42 | 18,03 | 10,29 | 390,42 | -8,14 | -4,07 | 390,42 |
| -10,64 | -5,61 | 390,42 | 18,05 | 10,26 | 390,42 | -8,73 | -4,55 | 390,42 |
| -10,64 | -5,56 | 390,42 | 18,07 | 10,24 | 390,42 | -9,22 | -4,95 | 390,42 |
| -10,64 | -5,49 | 390,42 | 18,08 | 10,22 | 390,42 | -9,63 | -5,28 | 390,42 |
| -10,63 | -5,42 | 390,42 | 18,08 | 10,21 | 390,42 | -9,96 | -5,52 | 390,42 |
| -10,61 | -5,33 | 390,42 | 18,09 | 10,20 | 390,42 | -10,21 | -5,68 | 390,42 |
| -10,50 | -5,03 | 390,42 | 18,09 | 10,19 | 390,42 | -10,30 | -5,72 | 390,42 |
| -10,31 | -4,65 | 390,42 | 18,09 | 10,18 | 390,42 | -10,37 | -5,74 | 390,42 |
| -10,05 | -4,18 | 390,42 | 18,09 | 10,16 | 390,42 | -10,43 | -5,76 | 390,42 |
| -9,70 | -3,62 | 390,42 | 18,10 | 10,13 | 390,42 | -10,48 | -5,75 | 390,42 |
| -9,26 | -2,96 | 390,42 | 18,09 | 10,09 | 390,42 | -10,52 | -5,75 | 390,42 |
| -8,71 | -2,24 | 390,42 | 18,07 | 10,04 | 390,42 | -10,55 | -5,74 | 390,42 |
| -8,06 | -1,44 | 390,42 | 18,03 | 9,99 | 390,42 | -10,56 | -5,72 | 390,42 |
| -7,30 | -0,59 | 390,42 | 17,97 | 9,95 | 390,42 | -10,57 | -5,72 | 390,42 |
| -6,43 | 0,29 | 390,42 | 17,88 | 9,92 | 390,42 | -10,58 | -5,71 | 390,42 |
| -5,44 | 1,19 | 390,42 | 17,60 | 9,82 | 390,42 | | | |
| -4,35 | 2,09 | 390,42 | 17,21 | 9,69 | 390,42 | | | |
| -3,16 | 2,98 | 390,42 | 16,72 | 9,52 | 390,42 | | | |
| -1,88 | 3,83 | 390,42 | 16,12 | 9,30 | 390,42 | | | |
| -0,52 | 4,64 | 390,42 | 15,41 | 9,03 | 390,42 | | | |
| 0,89 | 5,39 | 390,42 | 14,60 | 8,71 | 390,42 | | | |
| 2,35 | 6,07 | 390,42 | 13,69 | 8,33 | 390,42 | | | |
| 3,84 | 6,67 | 390,42 | 12,68 | 7,91 | 390,42 | | | |
| 5,32 | 7,21 | 390,42 | 11,58 | 7,44 | 390,42 | | | |
| 6,78 | 7,68 | 390,42 | 10,40 | 6,92 | 390,42 | | | |
| 8,21 | 8,09 | 390,42 | 9,16 | 6,36 | 390,42 | | | |
| 9,58 | 8,45 | 390,42 | 7,87 | 5,76 | 390,42 | | | |
| 10,88 | 8,77 | 390,42 | 6,54 | 5,12 | 390,42 | | | |
| 12,09 | 9,05 | 390,42 | 5,18 | 4,44 | 390,42 | | | |
| 13,20 | 9,30 | 390,42 | 3,81 | 3,74 | 390,42 | | | |
| 14,20 | 9,52 | 390,42 | 2,44 | 3,02 | 390,42 | | | |
| 15,09 | 9,71 | 390,42 | 1,09 | 2,27 | 390,42 | | | |
| 15,86 | 9,88 | 390,42 | -0,23 | 1,52 | 390,42 | | | |
| 16,51 | 10,02 | 390,42 | -1,50 | 0,76 | 390,42 | | | |
| 17,04 | 10,15 | 390,42 | -2,70 | 0,00 | 390,42 | | | |
| 17,45 | 10,24 | 390,42 | -3,83 | -0,76 | 390,42 | | | |

| **Coupe radiale 67** | | | | | | | | |
|---|---|---|---|---|---|---|---|---|
| **X** | **Y** | **Z** | **X** | **Y** | **Z** | **X** | **Y** | **Z** |
| -10,58 | -5,77 | 395,48 | 17,82 | 10,52 | 395,48 | -6,69 | -2,94 | 395,48 |
| -10,59 | -5,76 | 395,48 | 17,90 | 10,52 | 395,48 | -7,47 | -3,56 | 395,48 |
| -10,60 | -5,75 | 395,48 | 17,96 | 10,50 | 395,48 | -8,14 | -4,12 | 395,48 |
| -10,61 | -5,73 | 395,48 | 18,01 | 10,47 | 395,48 | -8,73 | -4,60 | 395,48 |
| -10,62 | -5,71 | 395,48 | 18,03 | 10,44 | 395,48 | -9,22 | -5,01 | 395,48 |
| -10,64 | -5,67 | 395,48 | 18,05 | 10,42 | 395,48 | -9,63 | -5,34 | 395,48 |
| -10,65 | -5,61 | 395,48 | 18,06 | 10,40 | 395,48 | -9,96 | -5,58 | 395,48 |
| -10,65 | -5,55 | 395,48 | 18,07 | 10,38 | 395,48 | -10,21 | -5,74 | 395,48 |
| -10,64 | -5,47 | 395,48 | 18,07 | 10,38 | 395,48 | -10,29 | -5,78 | 395,48 |
| -10,62 | -5,38 | 395,48 | 18,07 | 10,37 | 395,48 | -10,37 | -5,80 | 395,48 |
| -10,51 | -5,08 | 395,48 | 18,07 | 10,35 | 395,48 | -10,43 | -5,81 | 395,48 |
| -10,33 | -4,70 | 395,48 | 18,08 | 10,33 | 395,48 | -10,48 | -5,81 | 395,48 |
| -10,07 | -4,22 | 395,48 | 18,08 | 10,30 | 395,48 | -10,52 | -5,80 | 395,48 |
| -9,73 | -3,65 | 395,48 | 18,07 | 10,26 | 395,48 | -10,54 | -5,79 | 395,48 |
| -9,29 | -2,99 | 395,48 | 18,06 | 10,22 | 395,48 | -10,56 | -5,78 | 395,48 |
| -8,75 | -2,25 | 395,48 | 18,02 | 10,17 | 395,48 | -10,57 | -5,77 | 395,48 |
| -8,11 | -1,45 | 395,48 | 17,96 | 10,12 | 395,48 | -10,58 | -5,77 | 395,48 |
| -7,35 | -0,59 | 395,48 | 17,87 | 10,09 | 395,48 | | | |
| -6,48 | 0,30 | 395,48 | 17,59 | 10,00 | 395,48 | | | |
| -5,50 | 1,21 | 395,48 | 17,20 | 9,86 | 395,48 | | | |
| -4,40 | 2,12 | 395,48 | 16,71 | 9,68 | 395,48 | | | |
| -3,21 | 3,01 | 395,48 | 16,11 | 9,46 | 395,48 | | | |
| -1,93 | 3,87 | 395,48 | 15,40 | 9,18 | 395,48 | | | |
| -0,57 | 4,69 | 395,48 | 14,59 | 8,86 | 395,48 | | | |
| 0,84 | 5,45 | 395,48 | 13,67 | 8,47 | 395,48 | | | |
| 2,30 | 6,15 | 395,48 | 12,66 | 8,04 | 395,48 | | | |
| 3,78 | 6,77 | 395,48 | 11,57 | 7,56 | 395,48 | | | |
| 5,27 | 7,32 | 395,48 | 10,40 | 7,03 | 395,48 | | | |
| 6,73 | 7,81 | 395,48 | 9,16 | 6,45 | 395,48 | | | |
| 8,16 | 8,23 | 395,48 | 7,87 | 5,83 | 395,48 | | | |
| 9,53 | 8,60 | 395,48 | 6,54 | 5,17 | 395,48 | | | |
| 10,83 | 8,93 | 395,48 | 5,18 | 4,48 | 395,48 | | | |
| 12,05 | 9,21 | 395,48 | 3,82 | 3,76 | 395,48 | | | |
| 13,16 | 9,46 | 395,48 | 2,45 | 3,02 | 395,48 | | | |
| 14,17 | 9,68 | 395,48 | 1,11 | 2,26 | 395,48 | | | |
| 15,06 | 9,87 | 395,48 | -0,21 | 1,50 | 395,48 | | | |
| 15,83 | 10,05 | 395,48 | -1,48 | 0,73 | 395,48 | | | |
| 16,48 | 10,19 | 395,48 | -2,69 | -0,03 | 395,48 | | | |
| 17,01 | 10,32 | 395,48 | -3,82 | -0,80 | 395,48 | | | |
| 17,43 | 10,42 | 395,48 | -4,87 | -1,54 | 395,48 | | | |
| 17,73 | 10,50 | 395,48 | -5,83 | -2,26 | 395,48 | | | |

| **Coupe radiale 75** | | | | | | | | |
|---|---|---|---|---|---|---|---|---|
| **X** | **Y** | **Z** | **X** | **Y** | **Z** | **X** | **Y** | **Z** |
| -10,57 | -5,88 | 400,55 | 17,69 | 10,86 | 400,55 | -4,87 | -1,58 | 400,55 |
| -10,58 | -5,87 | 400,55 | 17,78 | 10,88 | 400,55 | -5,83 | -2,30 | 400,55 |
| -10,59 | -5,86 | 400,55 | 17,86 | 10,88 | 400,55 | -6,70 | -2,98 | 400,55 |
| -10,60 | -5,84 | 400,55 | 17,93 | 10,86 | 400,55 | -7,47 | -3,62 | 400,55 |
| -10,62 | -5,82 | 400,55 | 17,97 | 10,83 | 400,55 | -8,14 | -4,19 | 400,55 |
| -10,63 | -5,78 | 400,55 | 18,00 | 10,80 | 400,55 | -8,73 | -4,68 | 400,55 |
| -10,64 | -5,73 | 400,55 | 18,02 | 10,77 | 400,55 | -9,22 | -5,09 | 400,55 |
| -10,65 | -5,66 | 400,55 | 18,03 | 10,75 | 400,55 | -9,62 | -5,43 | 400,55 |
| -10,64 | -5,58 | 400,55 | 18,03 | 10,74 | 400,55 | -9,95 | -5,68 | 400,55 |
| -10,62 | -5,49 | 400,55 | 18,03 | 10,73 | 400,55 | -10,20 | -5,85 | 400,55 |
| -10,53 | -5,19 | 400,55 | 18,04 | 10,72 | 400,55 | -10,28 | -5,88 | 400,55 |
| -10,36 | -4,79 | 400,55 | 18,04 | 10,71 | 400,55 | -10,36 | -5,91 | 400,55 |
| -10,11 | -4,31 | 400,55 | 18,04 | 10,69 | 400,55 | -10,42 | -5,92 | 400,55 |
| -9,78 | -3,72 | 400,55 | 18,04 | 10,66 | 400,55 | -10,47 | -5,92 | 400,55 |
| -9,35 | -3,05 | 400,55 | 18,04 | 10,62 | 400,55 | -10,51 | -5,91 | 400,55 |
| -8,82 | -2,30 | 400,55 | 18,02 | 10,57 | 400,55 | -10,54 | -5,90 | 400,55 |
| -8,18 | -1,48 | 400,55 | 17,98 | 10,52 | 400,55 | -10,55 | -5,89 | 400,55 |
| -7,42 | -0,61 | 400,55 | 17,92 | 10,48 | 400,55 | -10,56 | -5,88 | 400,55 |
| -6,56 | 0,29 | 400,55 | 17,83 | 10,45 | 400,55 | -10,57 | -5,88 | 400,55 |
| -5,57 | 1,22 | 400,55 | 17,55 | 10,35 | 400,55 | | | |
| -4,48 | 2,14 | 400,55 | 17,16 | 10,21 | 400,55 | | | |
| -3,29 | 3,05 | 400,55 | 16,67 | 10,02 | 400,55 | | | |
| -2,01 | 3,93 | 400,55 | 16,07 | 9,79 | 400,55 | | | |
| -0,65 | 4,78 | 400,55 | 15,36 | 9,50 | 400,55 | | | |
| 0,76 | 5,56 | 400,55 | 14,55 | 9,16 | 400,55 | | | |
| 2,22 | 6,29 | 400,55 | 13,63 | 8,77 | 400,55 | | | |
| 3,70 | 6,94 | 400,55 | 12,62 | 8,32 | 400,55 | | | |
| 5,18 | 7,52 | 400,55 | 11,53 | 7,81 | 400,55 | | | |
| 6,65 | 8,03 | 400,55 | 10,36 | 7,26 | 400,55 | | | |
| 8,08 | 8,48 | 400,55 | 9,13 | 6,65 | 400,55 | | | |
| 9,46 | 8,87 | 400,55 | 7,84 | 6,00 | 400,55 | | | |
| 10,76 | 9,21 | 400,55 | 6,52 | 5,31 | 400,55 | | | |
| 11,98 | 9,51 | 400,55 | 5,18 | 4,59 | 400,55 | | | |
| 13,10 | 9,78 | 400,55 | 3,82 | 3,83 | 400,55 | | | |
| 14,11 | 10,01 | 400,55 | 2,46 | 3,07 | 400,55 | | | |
| 15,01 | 10,21 | 400,55 | 1,11 | 2,29 | 400,55 | | | |
| 15,79 | 10,39 | 400,55 | -0,20 | 1,51 | 400,55 | | | |
| 16,44 | 10,54 | 400,55 | -1,47 | 0,73 | 400,55 | | | |
| 16,97 | 10,67 | 400,55 | -2,68 | -0,05 | 400,55 | | | |
| 17,39 | 10,78 | 400,55 | -3,82 | -0,82 | 400,55 | | | |

| **Coupe radiale 84** | | | | | | | | |
|---|---|---|---|---|---|---|---|---|
| **X** | **Y** | **Z** | **X** | **Y** | **Z** | **X** | **Y** | **Z** |
| -10,55 | -6,07 | 405,61 | 17,60 | 11,62 | 405,61 | -4,89 | -1,58 | 405,61 |
| -10,56 | -6,06 | 405,61 | 17,70 | 11,64 | 405,61 | -5,85 | -2,33 | 405,61 |
| -10,57 | -6,05 | 405,61 | 17,78 | 11,65 | 405,61 | -6,72 | -3,04 | 405,61 |
| -10,58 | -6,04 | 405,61 | 17,84 | 11,63 | 405,61 | -7,48 | -3,69 | 405,61 |
| -10,60 | -6,01 | 405,61 | 17,89 | 11,60 | 405,61 | -8,15 | -4,29 | 405,61 |
| -10,62 | -5,97 | 405,61 | 17,92 | 11,57 | 405,61 | -8,72 | -4,81 | 405,61 |
| -10,63 | -5,92 | 405,61 | 17,94 | 11,55 | 405,61 | -9,21 | -5,24 | 405,61 |
| -10,64 | -5,85 | 405,61 | 17,95 | 11,53 | 405,61 | -9,61 | -5,59 | 405,61 |
| -10,64 | -5,77 | 405,61 | 17,95 | 11,51 | 405,61 | -9,93 | -5,86 | 405,61 |
| -10,62 | -5,68 | 405,61 | 17,95 | 11,51 | 405,61 | -10,18 | -6,03 | 405,61 |
| -10,54 | -5,37 | 405,61 | 17,96 | 11,50 | 405,61 | -10,26 | -6,07 | 405,61 |
| -10,38 | -4,96 | 405,61 | 17,96 | 11,48 | 405,61 | -10,33 | -6,10 | 405,61 |
| -10,15 | -4,46 | 405,61 | 17,96 | 11,46 | 405,61 | -10,40 | -6,11 | 405,61 |
| -9,84 | -3,86 | 405,61 | 17,97 | 11,43 | 405,61 | -10,45 | -6,11 | 405,61 |
| -9,43 | -3,16 | 405,61 | 17,96 | 11,39 | 405,61 | -10,49 | -6,10 | 405,61 |
| -8,92 | -2,38 | 405,61 | 17,94 | 11,34 | 405,61 | -10,52 | -6,09 | 405,61 |
| -8,29 | -1,54 | 405,61 | 17,91 | 11,29 | 405,61 | -10,54 | -6,08 | 405,61 |
| -7,55 | -0,63 | 405,61 | 17,84 | 11,25 | 405,61 | -10,55 | -6,07 | 405,61 |
| -6,69 | 0,31 | 405,61 | 17,76 | 11,22 | 405,61 | -10,55 | -6,07 | 405,61 |
| -5,72 | 1,27 | 405,61 | 17,47 | 11,11 | 405,61 | | | |
| -4,64 | 2,23 | 405,61 | 17,08 | 10,96 | 405,61 | | | |
| -3,45 | 3,19 | 405,61 | 16,59 | 10,76 | 405,61 | | | |
| -2,18 | 4,11 | 405,61 | 15,99 | 10,51 | 405,61 | | | |
| -0,83 | 5,00 | 405,61 | 15,28 | 10,21 | 405,61 | | | |
| 0,58 | 5,85 | 405,61 | 14,46 | 9,84 | 405,61 | | | |
| 2,03 | 6,63 | 405,61 | 13,54 | 9,42 | 405,61 | | | |
| 3,51 | 7,33 | 405,61 | 12,53 | 8,94 | 405,61 | | | |
| 5,00 | 7,97 | 405,61 | 11,44 | 8,40 | 405,61 | | | |
| 6,47 | 8,53 | 405,61 | 10,28 | 7,80 | 405,61 | | | |
| 7,91 | 9,03 | 405,61 | 9,05 | 7,15 | 405,61 | | | |
| 9,29 | 9,46 | 405,61 | 7,77 | 6,45 | 405,61 | | | |
| 10,61 | 9,84 | 405,61 | 6,46 | 5,70 | 405,61 | | | |
| 11,84 | 10,17 | 405,61 | 5,12 | 4,92 | 405,61 | | | |
| 12,97 | 10,46 | 405,61 | 3,77 | 4,11 | 405,61 | | | |
| 13,99 | 10,71 | 405,61 | 2,42 | 3,29 | 405,61 | | | |
| 14,90 | 10,92 | 405,61 | 1,08 | 2,47 | 405,61 | | | |
| 15,68 | 11,11 | 405,61 | -0,23 | 1,65 | 405,61 | | | |
| 16,34 | 11,28 | 405,61 | -1,50 | 0,83 | 405,61 | | | |
| 16,88 | 11,42 | 405,61 | -2,71 | 0,01 | 405,61 | | | |
| 17,30 | 11,53 | 405,61 | -3,84 | -0,79 | 405,61 | | | |

| **Coupe radiale 90** | | | | | | | | |
|---|---|---|---|---|---|---|---|---|
| **X** | **Y** | **Z** | **X** | **Y** | **Z** | **X** | **Y** | **Z** |
| -10,52 | -6,38 | 409,41 | 17,48 | 12,66 | 409,41 | -4,96 | -1,55 | 409,41 |
| -10,53 | -6,38 | 409,41 | 17,57 | 12,69 | 409,41 | -5,91 | -2,35 | 409,41 |
| -10,54 | -6,37 | 409,41 | 17,66 | 12,70 | 409,41 | -6,76 | -3,10 | 409,41 |
| -10,55 | -6,35 | 409,41 | 17,72 | 12,69 | 409,41 | -7,52 | -3,80 | 409,41 |
| -10,57 | -6,32 | 409,41 | 17,77 | 12,66 | 409,41 | -8,17 | -4,44 | 409,41 |
| -10,59 | -6,28 | 409,41 | 17,80 | 12,63 | 409,41 | -8,73 | -4,99 | 409,41 |
| -10,60 | -6,23 | 409,41 | 17,82 | 12,61 | 409,41 | -9,21 | -5,46 | 409,41 |
| -10,61 | -6,16 | 409,41 | 17,84 | 12,59 | 409,41 | -9,59 | -5,84 | 409,41 |
| -10,61 | -6,08 | 409,41 | 17,84 | 12,57 | 409,41 | -9,90 | -6,13 | 409,41 |
| -10,60 | -5,98 | 409,41 | 17,85 | 12,56 | 409,41 | -10,15 | -6,32 | 409,41 |
| -10,52 | -5,67 | 409,41 | 17,85 | 12,56 | 409,41 | -10,23 | -6,37 | 409,41 |
| -10,37 | -5,25 | 409,41 | 17,85 | 12,54 | 409,41 | -10,30 | -6,40 | 409,41 |
| -10,16 | -4,73 | 409,41 | 17,86 | 12,52 | 409,41 | -10,36 | -6,42 | 409,41 |
| -9,86 | -4,10 | 409,41 | 17,86 | 12,49 | 409,41 | -10,41 | -6,42 | 409,41 |
| -9,48 | -3,37 | 409,41 | 17,86 | 12,45 | 409,41 | -10,45 | -6,42 | 409,41 |
| -8,99 | -2,56 | 409,41 | 17,84 | 12,40 | 409,41 | -10,48 | -6,41 | 409,41 |
| -8,39 | -1,66 | 409,41 | 17,80 | 12,35 | 409,41 | -10,50 | -6,40 | 409,41 |
| -7,68 | -0,71 | 409,41 | 17,74 | 12,30 | 409,41 | -10,51 | -6,39 | 409,41 |
| -6,85 | 0,29 | 409,41 | 17,66 | 12,26 | 409,41 | -10,52 | -6,38 | 409,41 |
| -5,90 | 1,31 | 409,41 | 17,37 | 12,14 | 409,41 | | | |
| -4,84 | 2,34 | 409,41 | 16,98 | 11,97 | 409,41 | | | |
| -3,67 | 3,37 | 409,41 | 16,48 | 11,76 | 409,41 | | | |
| -2,42 | 4,37 | 409,41 | 15,88 | 11,49 | 409,41 | | | |
| -1,08 | 5,33 | 409,41 | 15,16 | 11,15 | 409,41 | | | |
| 0,32 | 6,25 | 409,41 | 14,34 | 10,76 | 409,41 | | | |
| 1,76 | 7,11 | 409,41 | 13,42 | 10,30 | 409,41 | | | |
| 3,24 | 7,90 | 409,41 | 12,40 | 9,78 | 409,41 | | | |
| 4,73 | 8,60 | 409,41 | 11,31 | 9,20 | 409,41 | | | |
| 6,21 | 9,23 | 409,41 | 10,14 | 8,56 | 409,41 | | | |
| 7,66 | 9,79 | 409,41 | 8,91 | 7,86 | 409,41 | | | |
| 9,05 | 10,27 | 409,41 | 7,63 | 7,10 | 409,41 | | | |
| 10,38 | 10,70 | 409,41 | 6,32 | 6,29 | 409,41 | | | |
| 11,63 | 11,07 | 409,41 | 4,99 | 5,44 | 409,41 | | | |
| 12,77 | 11,39 | 409,41 | 3,65 | 4,56 | 409,41 | | | |
| 13,81 | 11,67 | 409,41 | 2,31 | 3,67 | 409,41 | | | |
| 14,73 | 11,91 | 409,41 | 0,98 | 2,78 | 409,41 | | | |
| 15,53 | 12,12 | 409,41 | -0,33 | 1,89 | 409,41 | | | |
| 16,20 | 12,30 | 409,41 | -1,59 | 1,01 | 409,41 | | | |
| 16,74 | 12,45 | 409,41 | -2,79 | 0,14 | 409,41 | | | |
| 17,17 | 12,57 | 409,41 | -3,92 | -0,72 | 409,41 | | | |

| **Coupe radiale 92** | | | | | | | | |
|---|---|---|---|---|---|---|---|---|
| **X** | **Y** | **Z** | **X** | **Y** | **Z** | **X** | **Y** | **Z** |
| -10,47 | -6,78 | 412,00 | 17,35 | 13,81 | 412,00 | -4,99 | -1,60 | 412,00 |
| -10,48 | -6,78 | 412,00 | 17,44 | 13,85 | 412,00 | -5,94 | -2,45 | 412,00 |
| -10,49 | -6,77 | 412,00 | 17,52 | 13,87 | 412,00 | -6,78 | -3,25 | 412,00 |
| -10,51 | -6,75 | 412,00 | 17,59 | 13,87 | 412,00 | -7,53 | -3,99 | 412,00 |
| -10,52 | -6,72 | 412,00 | 17,64 | 13,86 | 412,00 | -8,17 | -4,66 | 412,00 |
| -10,54 | -6,68 | 412,00 | 17,68 | 13,83 | 412,00 | -8,73 | -5,25 | 412,00 |
| -10,56 | -6,63 | 412,00 | 17,70 | 13,81 | 412,00 | -9,19 | -5,75 | 412,00 |
| -10,57 | -6,56 | 412,00 | 17,72 | 13,79 | 412,00 | -9,57 | -6,15 | 412,00 |
| -10,57 | -6,47 | 412,00 | 17,72 | 13,78 | 412,00 | -9,87 | -6,47 | 412,00 |
| -10,55 | -6,37 | 412,00 | 17,73 | 13,77 | 412,00 | -10,10 | -6,68 | 412,00 |
| -10,47 | -6,05 | 412,00 | 17,73 | 13,76 | 412,00 | -10,18 | -6,74 | 412,00 |
| -10,32 | -5,63 | 412,00 | 17,74 | 13,75 | 412,00 | -10,25 | -6,78 | 412,00 |
| -10,11 | -5,09 | 412,00 | 17,75 | 13,73 | 412,00 | -10,31 | -6,81 | 412,00 |
| -9,82 | -4,44 | 412,00 | 17,75 | 13,70 | 412,00 | -10,36 | -6,81 | 412,00 |
| -9,45 | -3,68 | 412,00 | 17,75 | 13,66 | 412,00 | -10,40 | -6,81 | 412,00 |
| -8,98 | -2,83 | 412,00 | 17,73 | 13,60 | 412,00 | -10,43 | -6,80 | 412,00 |
| -8,41 | -1,90 | 412,00 | 17,69 | 13,55 | 412,00 | -10,45 | -6,80 | 412,00 |
| -7,73 | -0,89 | 412,00 | 17,63 | 13,51 | 412,00 | -10,47 | -6,79 | 412,00 |
| -6,93 | 0,16 | 412,00 | 17,54 | 13,47 | 412,00 | -10,47 | -6,78 | 412,00 |
| -6,01 | 1,25 | 412,00 | 17,25 | 13,33 | 412,00 | | | |
| -4,98 | 2,36 | 412,00 | 16,86 | 13,14 | 412,00 | | | |
| -3,85 | 3,47 | 412,00 | 16,36 | 12,90 | 412,00 | | | |
| -2,62 | 4,55 | 412,00 | 15,76 | 12,59 | 412,00 | | | |
| -1,30 | 5,60 | 412,00 | 15,04 | 12,22 | 412,00 | | | |
| 0,09 | 6,61 | 412,00 | 14,22 | 11,78 | 412,00 | | | |
| 1,53 | 7,54 | 412,00 | 13,30 | 11,28 | 412,00 | | | |
| 3,00 | 8,41 | 412,00 | 12,28 | 10,71 | 412,00 | | | |
| 4,49 | 9,19 | 412,00 | 11,18 | 10,07 | 412,00 | | | |
| 5,97 | 9,90 | 412,00 | 10,02 | 9,36 | 412,00 | | | |
| 7,42 | 10,53 | 412,00 | 8,79 | 8,59 | 412,00 | | | |
| 8,83 | 11,09 | 412,00 | 7,52 | 7,76 | 412,00 | | | |
| 10,16 | 11,58 | 412,00 | 6,22 | 6,87 | 412,00 | | | |
| 11,42 | 12,02 | 412,00 | 4,90 | 5,94 | 412,00 | | | |
| 12,57 | 12,39 | 412,00 | 3,57 | 4,99 | 412,00 | | | |
| 13,62 | 12,71 | 412,00 | 2,24 | 4,02 | 412,00 | | | |
| 14,55 | 12,99 | 412,00 | 0,91 | 3,05 | 412,00 | | | |
| 15,36 | 13,22 | 412,00 | -0,38 | 2,09 | 412,00 | | | |
| 16,04 | 13,42 | 412,00 | -1,64 | 1,14 | 412,00 | | | |
| 16,60 | 13,58 | 412,00 | -2,83 | 0,20 | 412,00 | | | |
| 17,03 | 13,71 | 412,00 | -3,95 | -0,71 | 412,00 | | | |

| **Coupe radiale 93** | | | | | | | | |
|---|---|---|---|---|---|---|---|---|
| **X** | **Y** | **Z** | **X** | **Y** | **Z** | **X** | **Y** | **Z** |
| -10,45 | -7,03 | 413,20 | 17,29 | 14,30 | 413,20 | -5,03 | -1,67 | 413,20 |
| -10,46 | -7,03 | 413,20 | 17,39 | 14,33 | 413,20 | -5,97 | -2,55 | 413,20 |
| -10,47 | -7,02 | 413,20 | 17,47 | 14,34 | 413,20 | -6,81 | -3,37 | 413,20 |
| -10,48 | -7,00 | 413,20 | 17,54 | 14,34 | 413,20 | -7,55 | -4,14 | 413,20 |
| -10,50 | -6,97 | 413,20 | 17,60 | 14,32 | 413,20 | -8,19 | -4,83 | 413,20 |
| -10,52 | -6,93 | 413,20 | 17,63 | 14,29 | 413,20 | -8,73 | -5,43 | 413,20 |
| -10,53 | -6,88 | 413,20 | 17,65 | 14,26 | 413,20 | -9,19 | -5,94 | 413,20 |
| -10,54 | -6,81 | 413,20 | 17,67 | 14,24 | 413,20 | -9,56 | -6,36 | 413,20 |
| -10,54 | -6,72 | 413,20 | 17,67 | 14,23 | 413,20 | -9,85 | -6,69 | 413,20 |
| -10,53 | -6,62 | 413,20 | 17,68 | 14,22 | 413,20 | -10,08 | -6,92 | 413,20 |
| -10,44 | -6,30 | 413,20 | 17,68 | 14,21 | 413,20 | -10,15 | -6,98 | 413,20 |
| -10,30 | -5,86 | 413,20 | 17,69 | 14,20 | 413,20 | -10,22 | -7,03 | 413,20 |
| -10,09 | -5,32 | 413,20 | 17,69 | 14,18 | 413,20 | -10,28 | -7,05 | 413,20 |
| -9,81 | -4,66 | 413,20 | 17,70 | 14,15 | 413,20 | -10,33 | -7,06 | 413,20 |
| -9,44 | -3,89 | 413,20 | 17,69 | 14,10 | 413,20 | -10,38 | -7,06 | 413,20 |
| -8,98 | -3,02 | 413,20 | 17,68 | 14,05 | 413,20 | -10,41 | -7,06 | 413,20 |
| -8,42 | -2,06 | 413,20 | 17,64 | 14,00 | 413,20 | -10,43 | -7,05 | 413,20 |
| -7,75 | -1,03 | 413,20 | 17,57 | 13,95 | 413,20 | -10,44 | -7,04 | 413,20 |
| -6,97 | 0,06 | 413,20 | 17,49 | 13,91 | 413,20 | -10,45 | -7,03 | 413,20 |
| -6,08 | 1,19 | 413,20 | 17,20 | 13,76 | 413,20 | | | |
| -5,07 | 2,34 | 413,20 | 16,81 | 13,57 | 413,20 | | | |
| -3,96 | 3,50 | 413,20 | 16,31 | 13,31 | 413,20 | | | |
| -2,74 | 4,63 | 413,20 | 15,70 | 13,00 | 413,20 | | | |
| -1,44 | 5,73 | 413,20 | 14,98 | 12,62 | 413,20 | | | |
| -0,06 | 6,78 | 413,20 | 14,15 | 12,17 | 413,20 | | | |
| 1,37 | 7,76 | 413,20 | 13,22 | 11,65 | 413,20 | | | |
| 2,85 | 8,66 | 413,20 | 12,20 | 11,06 | 413,20 | | | |
| 4,34 | 9,48 | 413,20 | 11,10 | 10,41 | 413,20 | | | |
| 5,82 | 10,23 | 413,20 | 9,92 | 9,68 | 413,20 | | | |
| 7,28 | 10,89 | 413,20 | 8,69 | 8,89 | 413,20 | | | |
| 8,70 | 11,48 | 413,20 | 7,42 | 8,03 | 413,20 | | | |
| 10,04 | 11,99 | 413,20 | 6,12 | 7,12 | 413,20 | | | |
| 11,31 | 12,44 | 413,20 | 4,80 | 6,16 | 413,20 | | | |
| 12,47 | 12,83 | 413,20 | 3,47 | 5,17 | 413,20 | | | |
| 13,53 | 13,17 | 413,20 | 2,14 | 4,17 | 413,20 | | | |
| 14,47 | 13,45 | 413,20 | 0,83 | 3,17 | 413,20 | | | |
| 15,28 | 13,70 | 413,20 | -0,46 | 2,17 | 413,20 | | | |
| 15,97 | 13,91 | 413,20 | -1,71 | 1,18 | 413,20 | | | |
| 16,53 | 14,07 | 413,20 | -2,89 | 0,20 | 413,20 | | | |
| 16,97 | 14,20 | 413,20 | -4,00 | -0,75 | 413,20 | | | |

| **Coupe radiale 95** | | | | | | | | |
|---|---|---|---|---|---|---|---|---|
| **X** | **Y** | **Z** | **X** | **Y** | **Z** | **X** | **Y** | **Z** |
| -10,35 | -7,69 | 415,48 | 17,34 | 14,95 | 415,48 | -5,16 | -1,92 | 415,48 |
| -10,36 | -7,69 | 415,48 | 17,44 | 14,92 | 415,48 | -6,07 | -2,85 | 415,48 |
| -10,37 | -7,68 | 415,48 | 17,52 | 14,87 | 415,48 | -6,88 | -3,73 | 415,48 |
| -10,39 | -7,66 | 415,48 | 17,57 | 14,82 | 415,48 | -7,60 | -4,54 | 415,48 |
| -10,41 | -7,63 | 415,48 | 17,60 | 14,77 | 415,48 | -8,21 | -5,28 | 415,48 |
| -10,43 | -7,59 | 415,48 | 17,62 | 14,73 | 415,48 | -8,73 | -5,93 | 415,48 |
| -10,45 | -7,53 | 415,48 | 17,63 | 14,70 | 415,48 | -9,16 | -6,48 | 415,48 |
| -10,45 | -7,46 | 415,48 | 17,63 | 14,67 | 415,48 | -9,51 | -6,93 | 415,48 |
| -10,45 | -7,37 | 415,48 | 17,63 | 14,66 | 415,48 | -9,78 | -7,28 | 415,48 |
| -10,44 | -7,27 | 415,48 | 17,64 | 14,65 | 415,48 | -9,99 | -7,53 | 415,48 |
| -10,37 | -6,93 | 415,48 | 17,64 | 14,64 | 415,48 | -10,06 | -7,60 | 415,48 |
| -10,23 | -6,48 | 415,48 | 17,64 | 14,63 | 415,48 | -10,12 | -7,66 | 415,48 |
| -10,02 | -5,92 | 415,48 | 17,64 | 14,60 | 415,48 | -10,18 | -7,69 | 415,48 |
| -9,75 | -5,23 | 415,48 | 17,63 | 14,57 | 415,48 | -10,23 | -7,71 | 415,48 |
| -9,40 | -4,43 | 415,48 | 17,63 | 14,53 | 415,48 | -10,28 | -7,72 | 415,48 |
| -8,96 | -3,52 | 415,48 | 17,61 | 14,47 | 415,48 | -10,31 | -7,71 | 415,48 |
| -8,43 | -2,51 | 415,48 | 17,58 | 14,41 | 415,48 | -10,33 | -7,70 | 415,48 |
| -7,80 | -1,41 | 415,48 | 17,53 | 14,35 | 415,48 | -10,34 | -7,70 | 415,48 |
| -7,07 | -0,24 | 415,48 | 17,46 | 14,28 | 415,48 | -10,35 | -7,69 | 415,48 |
| -6,22 | 0,98 | 415,48 | 17,17 | 14,13 | 415,48 | | | |
| -5,27 | 2,23 | 415,48 | 16,77 | 13,94 | 415,48 | | | |
| -4,20 | 3,48 | 415,48 | 16,25 | 13,69 | 415,48 | | | |
| -3,02 | 4,72 | 415,48 | 15,63 | 13,38 | 415,48 | | | |
| -1,75 | 5,93 | 415,48 | 14,89 | 13,00 | 415,48 | | | |
| -0,39 | 7,08 | 415,48 | 14,04 | 12,56 | 415,48 | | | |
| 1,04 | 8,15 | 415,48 | 13,09 | 12,04 | 415,48 | | | |
| 2,52 | 9,14 | 415,48 | 12,04 | 11,46 | 415,48 | | | |
| 4,03 | 10,04 | 415,48 | 10,92 | 10,79 | 415,48 | | | |
| 5,53 | 10,84 | 415,48 | 9,72 | 10,06 | 415,48 | | | |
| 7,02 | 11,55 | 415,48 | 8,47 | 9,25 | 415,48 | | | |
| 8,47 | 12,17 | 415,48 | 7,17 | 8,38 | 415,48 | | | |
| 9,85 | 12,71 | 415,48 | 5,85 | 7,44 | 415,48 | | | |
| 11,15 | 13,18 | 415,48 | 4,52 | 6,45 | 415,48 | | | |
| 12,35 | 13,58 | 415,48 | 3,18 | 5,42 | 415,48 | | | |
| 13,44 | 13,92 | 415,48 | 1,86 | 4,37 | 415,48 | | | |
| 14,41 | 14,21 | 415,48 | 0,56 | 3,30 | 415,48 | | | |
| 15,25 | 14,45 | 415,48 | -0,71 | 2,22 | 415,48 | | | |
| 15,96 | 14,65 | 415,48 | -1,93 | 1,15 | 415,48 | | | |
| 16,54 | 14,81 | 415,48 | -3,08 | 0,10 | 415,48 | | | |
| 17,00 | 14,92 | 415,48 | -4,16 | -0,93 | 415,48 | | | |

| **Coupe radiale 97** | | | | | | | | |
|---|---|---|---|---|---|---|---|---|
| **X** | **Y** | **Z** | **X** | **Y** | **Z** | **X** | **Y** | **Z** |
| -10,30 | -8,01 | 417,00 | 17,42 | 15,14 | 417,00 | -5,23 | -2,04 | 417,00 |
| -10,31 | -8,01 | 417,00 | 17,50 | 15,07 | 417,00 | -6,13 | -3,01 | 417,00 |
| -10,32 | -8,00 | 417,00 | 17,55 | 15,00 | 417,00 | -6,93 | -3,92 | 417,00 |
| -10,34 | -7,98 | 417,00 | 17,58 | 14,94 | 417,00 | -7,63 | -4,75 | 417,00 |
| -10,36 | -7,95 | 417,00 | 17,60 | 14,88 | 417,00 | -8,22 | -5,51 | 417,00 |
| -10,38 | -7,91 | 417,00 | 17,61 | 14,83 | 417,00 | -8,73 | -6,17 | 417,00 |
| -10,40 | -7,85 | 417,00 | 17,61 | 14,80 | 417,00 | -9,14 | -6,74 | 417,00 |
| -10,41 | -7,78 | 417,00 | 17,61 | 14,77 | 417,00 | -9,48 | -7,21 | 417,00 |
| -10,41 | -7,69 | 417,00 | 17,61 | 14,76 | 417,00 | -9,74 | -7,57 | 417,00 |
| -10,39 | -7,59 | 417,00 | 17,61 | 14,75 | 417,00 | -9,95 | -7,83 | 417,00 |
| -10,33 | -7,24 | 417,00 | 17,61 | 14,74 | 417,00 | -10,01 | -7,90 | 417,00 |
| -10,21 | -6,78 | 417,00 | 17,61 | 14,72 | 417,00 | -10,07 | -7,96 | 417,00 |
| -10,00 | -6,21 | 417,00 | 17,60 | 14,70 | 417,00 | -10,13 | -8,00 | 417,00 |
| -9,72 | -5,51 | 417,00 | 17,60 | 14,67 | 417,00 | -10,18 | -8,03 | 417,00 |
| -9,38 | -4,69 | 417,00 | 17,59 | 14,63 | 417,00 | -10,22 | -8,03 | 417,00 |
| -8,95 | -3,76 | 417,00 | 17,57 | 14,57 | 417,00 | -10,26 | -8,03 | 417,00 |
| -8,44 | -2,72 | 417,00 | 17,54 | 14,51 | 417,00 | -10,28 | -8,02 | 417,00 |
| -7,83 | -1,59 | 417,00 | 17,50 | 14,44 | 417,00 | -10,29 | -8,02 | 417,00 |
| -7,11 | -0,38 | 417,00 | 17,44 | 14,36 | 417,00 | -10,30 | -8,01 | 417,00 |
| -6,29 | 0,88 | 417,00 | 17,15 | 14,19 | 417,00 | | | |
| -5,36 | 2,17 | 417,00 | 16,74 | 14,01 | 417,00 | | | |
| -4,31 | 3,48 | 417,00 | 16,22 | 13,77 | 417,00 | | | |
| -3,15 | 4,77 | 417,00 | 15,59 | 13,46 | 417,00 | | | |
| -1,89 | 6,02 | 417,00 | 14,84 | 13,09 | 417,00 | | | |
| -0,54 | 7,22 | 417,00 | 13,98 | 12,66 | 417,00 | | | |
| 0,89 | 8,34 | 417,00 | 13,01 | 12,15 | 417,00 | | | |
| 2,37 | 9,37 | 417,00 | 11,96 | 11,57 | 417,00 | | | |
| 3,89 | 10,30 | 417,00 | 10,81 | 10,91 | 417,00 | | | |
| 5,41 | 11,13 | 417,00 | 9,60 | 10,18 | 417,00 | | | |
| 6,92 | 11,85 | 417,00 | 8,33 | 9,38 | 417,00 | | | |
| 8,39 | 12,48 | 417,00 | 7,03 | 8,50 | 417,00 | | | |
| 9,80 | 13,02 | 417,00 | 5,69 | 7,56 | 417,00 | | | |
| 11,12 | 13,48 | 417,00 | 4,35 | 6,56 | 417,00 | | | |
| 12,34 | 13,88 | 417,00 | 3,01 | 5,52 | 417,00 | | | |
| 13,45 | 14,22 | 417,00 | 1,69 | 4,44 | 417,00 | | | |
| 14,43 | 14,50 | 417,00 | 0,40 | 3,34 | 417,00 | | | |
| 15,29 | 14,75 | 417,00 | -0,85 | 2,23 | 417,00 | | | |
| 16,01 | 14,95 | 417,00 | -2,05 | 1,13 | 417,00 | | | |
| 16,60 | 15,10 | 417,00 | -3,19 | 0,04 | 417,00 | | | |
| 17,07 | 15,19 | 417,00 | -4,25 | -1,02 | 417,00 | | | |

| **Coupe radiale 98** | | | | | | | | |
|---|---|---|---|---|---|---|---|---|
| **X** | **Y** | **Z** | **X** | **Y** | **Z** | **X** | **Y** | **Z** |
| -10,30 | -8,01 | 420,80 | 17,41 | 15,14 | 420,80 | -5,23 | -2,04 | 420,80 |
| -10,31 | -8,01 | 420,80 | 17,50 | 15,07 | 420,80 | -6,13 | -3,01 | 420,80 |
| -10,32 | -8,00 | 420,80 | 17,55 | 15,00 | 420,80 | -6,93 | -3,91 | 420,80 |
| -10,34 | -7,98 | 420,80 | 17,58 | 14,94 | 420,80 | -7,63 | -4,75 | 420,80 |
| -10,36 | -7,95 | 420,80 | 17,60 | 14,88 | 420,80 | -8,22 | -5,51 | 420,80 |
| -10,38 | -7,91 | 420,80 | 17,61 | 14,83 | 420,80 | -8,73 | -6,17 | 420,80 |
| -10,40 | -7,85 | 420,80 | 17,61 | 14,80 | 420,80 | -9,14 | -6,74 | 420,80 |
| -10,41 | -7,78 | 420,80 | 17,61 | 14,78 | 420,80 | -9,48 | -7,21 | 420,80 |
| -10,41 | -7,69 | 420,80 | 17,61 | 14,76 | 420,80 | -9,74 | -7,57 | 420,80 |
| -10,39 | -7,59 | 420,80 | 17,61 | 14,75 | 420,80 | -9,95 | -7,83 | 420,80 |
| -10,33 | -7,24 | 420,80 | 17,61 | 14,74 | 420,80 | -10,01 | -7,90 | 420,80 |
| -10,21 | -6,78 | 420,80 | 17,61 | 14,73 | 420,80 | -10,07 | -7,96 | 420,80 |
| -10,00 | -6,21 | 420,80 | 17,60 | 14,70 | 420,80 | -10,13 | -8,00 | 420,80 |
| -9,72 | -5,51 | 420,80 | 17,60 | 14,67 | 420,80 | -10,18 | -8,03 | 420,80 |
| -9,38 | -4,69 | 420,80 | 17,59 | 14,63 | 420,80 | -10,22 | -8,03 | 420,80 |
| -8,95 | -3,76 | 420,80 | 17,57 | 14,58 | 420,80 | -10,26 | -8,03 | 420,80 |
| -8,44 | -2,72 | 420,80 | 17,54 | 14,51 | 420,80 | -10,28 | -8,02 | 420,80 |
| -7,83 | -1,59 | 420,80 | 17,50 | 14,44 | 420,80 | -10,29 | -8,02 | 420,80 |
| -7,11 | -0,38 | 420,80 | 17,44 | 14,37 | 420,80 | -10,30 | -8,01 | 420,80 |
| -6,29 | 0,88 | 420,80 | 17,15 | 14,20 | 420,80 | | | |
| -5,36 | 2,17 | 420,80 | 16,74 | 14,01 | 420,80 | | | |
| -4,31 | 3,48 | 420,80 | 16,22 | 13,77 | 420,80 | | | |
| -3,15 | 4,77 | 420,80 | 15,59 | 13,46 | 420,80 | | | |
| -1,89 | 6,02 | 420,80 | 14,84 | 13,09 | 420,80 | | | |
| -0,54 | 7,22 | 420,80 | 13,98 | 12,66 | 420,80 | | | |
| 0,89 | 8,34 | 420,80 | 13,01 | 12,15 | 420,80 | | | |
| 2,37 | 9,37 | 420,80 | 11,96 | 11,57 | 420,80 | | | |
| 3,89 | 10,30 | 420,80 | 10,81 | 10,91 | 420,80 | | | |
| 5,41 | 11,13 | 420,80 | 9,60 | 10,18 | 420,80 | | | |
| 6,92 | 11,85 | 420,80 | 8,33 | 9,38 | 420,80 | | | |
| 8,39 | 12,48 | 420,80 | 7,03 | 8,50 | 420,80 | | | |
| 9,79 | 13,02 | 420,80 | 5,69 | 7,56 | 420,80 | | | |
| 11,12 | 13,48 | 420,80 | 4,35 | 6,57 | 420,80 | | | |
| 12,34 | 13,88 | 420,80 | 3,01 | 5,52 | 420,80 | | | |
| 13,45 | 14,22 | 420,80 | 1,69 | 4,44 | 420,80 | | | |
| 14,43 | 14,50 | 420,80 | 0,40 | 3,34 | 420,80 | | | |
| 15,28 | 14,75 | 420,80 | -0,85 | 2,23 | 420,80 | | | |
| 16,01 | 14,95 | 420,80 | -2,05 | 1,13 | 420,80 | | | |
| 16,60 | 15,10 | 420,80 | -3,19 | 0,04 | 420,80 | | | |
| 17,07 | 15,19 | 420,80 | -4,25 | -1,02 | 420,80 | | | |

| **Coupe radiale 99** | | | | | | | | |
|---|---|---|---|---|---|---|---|---|
| **X** | **Y** | **Z** | **X** | **Y** | **Z** | **X** | **Y** | **Z** |
| -10,30 | -8,01 | 424,80 | 17,41 | 15,14 | 424,80 | -5,23 | -2,04 | 424,80 |
| -10,31 | -8,01 | 424,80 | 17,50 | 15,07 | 424,80 | -6,13 | -3,01 | 424,80 |
| -10,32 | -8,00 | 424,80 | 17,55 | 15,00 | 424,80 | -6,93 | -3,92 | 424,80 |
| -10,34 | -7,98 | 424,80 | 17,58 | 14,94 | 424,80 | -7,63 | -4,75 | 424,80 |
| -10,36 | -7,95 | 424,80 | 17,60 | 14,88 | 424,80 | -8,22 | -5,51 | 424,80 |
| -10,38 | -7,91 | 424,80 | 17,61 | 14,83 | 424,80 | -8,73 | -6,17 | 424,80 |
| -10,40 | -7,85 | 424,80 | 17,61 | 14,80 | 424,80 | -9,14 | -6,74 | 424,80 |
| -10,41 | -7,78 | 424,80 | 17,61 | 14,78 | 424,80 | -9,48 | -7,21 | 424,80 |
| -10,41 | -7,69 | 424,80 | 17,61 | 14,76 | 424,80 | -9,74 | -7,57 | 424,80 |
| -10,39 | -7,59 | 424,80 | 17,61 | 14,75 | 424,80 | -9,95 | -7,83 | 424,80 |
| -10,33 | -7,24 | 424,80 | 17,61 | 14,74 | 424,80 | -10,01 | -7,90 | 424,80 |
| -10,21 | -6,78 | 424,80 | 17,61 | 14,73 | 424,80 | -10,07 | -7,96 | 424,80 |
| -10,00 | -6,21 | 424,80 | 17,60 | 14,70 | 424,80 | -10,13 | -8,00 | 424,80 |
| -9,72 | -5,51 | 424,80 | 17,60 | 14,67 | 424,80 | -10,18 | -8,03 | 424,80 |
| -9,38 | -4,69 | 424,80 | 17,59 | 14,63 | 424,80 | -10,22 | -8,03 | 424,80 |
| -8,95 | -3,76 | 424,80 | 17,57 | 14,58 | 424,80 | -10,26 | -8,03 | 424,80 |
| -8,44 | -2,72 | 424,80 | 17,54 | 14,51 | 424,80 | -10,28 | -8,02 | 424,80 |
| -7,83 | -1,59 | 424,80 | 17,50 | 14,44 | 424,80 | -10,29 | -8,02 | 424,80 |
| -7,11 | -0,38 | 424,80 | 17,44 | 14,37 | 424,80 | -10,30 | -8,01 | 424,80 |
| -6,29 | 0,88 | 424,80 | 17,15 | 14,20 | 424,80 | | | |
| -5,36 | 2,17 | 424,80 | 16,74 | 14,01 | 424,80 | | | |
| -4,31 | 3,48 | 424,80 | 16,22 | 13,77 | 424,80 | | | |
| -3,15 | 4,77 | 424,80 | 15,59 | 13,46 | 424,80 | | | |
| -1,89 | 6,02 | 424,80 | 14,84 | 13,09 | 424,80 | | | |
| -0,54 | 7,22 | 424,80 | 13,98 | 12,66 | 424,80 | | | |
| 0,89 | 8,34 | 424,80 | 13,01 | 12,15 | 424,80 | | | |
| 2,37 | 9,37 | 424,80 | 11,96 | 11,57 | 424,80 | | | |
| 3,89 | 10,30 | 424,80 | 10,81 | 10,91 | 424,80 | | | |
| 5,41 | 11,13 | 424,80 | 9,60 | 10,18 | 424,80 | | | |
| 6,92 | 11,85 | 424,80 | 8,33 | 9,38 | 424,80 | | | |
| 8,39 | 12,48 | 424,80 | 7,03 | 8,50 | 424,80 | | | |
| 9,79 | 13,02 | 424,80 | 5,69 | 7,56 | 424,80 | | | |
| 11,12 | 13,48 | 424,80 | 4,35 | 6,57 | 424,80 | | | |
| 12,34 | 13,88 | 424,80 | 3,01 | 5,52 | 424,80 | | | |
| 13,44 | 14,22 | 424,80 | 1,69 | 4,44 | 424,80 | | | |
| 14,43 | 14,50 | 424,80 | 0,40 | 3,34 | 424,80 | | | |
| 15,28 | 14,75 | 424,80 | -0,85 | 2,23 | 424,80 | | | |
| 16,01 | 14,95 | 424,80 | -2,05 | 1,13 | 424,80 | | | |
| 16,60 | 15,10 | 424,80 | -3,19 | 0,04 | 424,80 | | | |
| 17,07 | 15,19 | 424,80 | -4,25 | -1,02 | 424,80 | | | |

Une autre caractéristique géométrique importante de l'aube 2 est son angle de calage. Comme illustré à la figure 6, l'angle de calage α correspond à l'angle direct formé par la corde C de l'aube avec l'axe Y, pour une coupe radiale donnée c'est à dire pour une valeur de Z donnée. Le graphique de la figure 7 montre, pour l'ensemble des valeurs de Z constitutives de l'aube 2, l'évolution de la valeur de l'angle de calage α. L'angle de calage définit l'angle avec lequel l'aube 2 attaque le flux d'air en provenance de l'amont de la turbomachine et a donc une influence directe sur la qualité du redressement du flux d'air.

A partir des coordonnées de l'ensemble des points d'une coupe radiale donnée, cette coupe peut être reconstituée en reliant ces points par des arcs liés entre eux de façon lisse et continue au sens mathématique du terme. Une fois chaque coupe radiale reconstituée, l'aube 2 peut est obtenue de la même manière, en reliant entre elles les différentes coupes de façon lisse et continue. Le profil reconstitué ainsi obtenu correspond à l'aube dans les conditions ambiantes de température et de pression, soumise à aucun effort. Par ailleurs, ce profil reconstitué ne prend pas en compte la présence éventuelle d'un revêtement. Il correspond à une aube 2 dont l'ensemble des dimensions sont au nominal. Il est donc nécessaire de prendre en compte les tolérances de fabrication, de ± 0,10 mm, qui viennent s'ajouter ou se soustraire aux coordonnées X et Y données dans le Tableau 1. La prise en compte de ces tolérances amène à définir deux enveloppes entourant le profil reconstitué, l'une à l'extérieur du profil, l'autre à l'intérieur. Ces deux enveloppes représentent une plage de variation possible entre les points réellement mesurés constitutifs de l'aube 2 et les points du profil nominal. Tant que le profil mesuré de l'aube 2 reste compris entre ces deux enveloppes, aucune influence néfaste de la variation de la géométrie du profil ne se produit sur les caractéristiques mécaniques et aérodynamiques de l'aube.

Le profil aérodynamique nominal tel que défini dans le Tableau 1 correspond au mode de réalisation préféré de l'invention. Dans ce mode de réalisation, l'aube, d'une hauteur totale de 67 mm, s'étend entre les hauteurs Z = 350,23 mm et Z = 417,57 mm. L'angle de calage α est compris entre 48,6 et 61,1 degrés. Le rayon de courbure du bord de fuite de la partie radialement interne 2a est de l'ordre de 0,2 mm, pour atteindre 0,5 mm dans la partie de liaison 2b. Dans la zone 20, l'épaisseur de l'aube vers le BF côté intrados est augmentée sur un tiers de la corde C et sur 2,3 mm soit environ 3,4% de la hauteur de l'aube.

## Revendications

1. Aube de redresseur de turbomachine, l'aube (2) comportant un profil aérodynamique et un axe d'empilement (E), la turbomachine ayant un axe de rotation (R),
**caractérisée en ce que** l'aube est constituée d'une pluralité de coupes radiales effectuées orthogonalement à son axe d'empilement (E), chaque coupe radiale étant composée de points dont les coordonnées cartésiennes X, Y et Z sont telles que définies dans le Tableau 1, la coordonnée Z correspondant à la distance entre une coupe radiale considérée et l'axe de rotation de la turbomachine (R), X et Y correspondant aux coordonnées dans le plan comprenant la coupe considérée des points formant cette coupe, l'axe des X étant parallèle à l'axe de rotation de la turbomachine, (R), les valeurs de X étant croissantes dans le sens d'écoulement des gaz de la turbomachine, l'origine de l'axe des X origine étant située à son intersection avec l'axe Z, l'axe des Y étant tel que le repère (X, Y, Z) soit un repère orthogonal direct.

2. Aube de redresseur selon la revendication 1,
**caractérisée en ce que** chaque coupe radiale comporte un centre de gravité dont les coordonnées cartésiennes X et Y sont données par la figure 5.

3. Aube de redresseur selon l'une quelconque des revendications 1 ou 2,
**caractérisée en ce que** chaque coupe radiale comporte un bord d'attaque (6) et un bord de fuite (7), la valeur de l'angle direct (α) formé par la droite reliant le bord d'attaque au bord de fuite et l'axe des Y suivant la courbe donnée à la figure 7.

4. Aube de redresseur selon l'une quelconque des revendications 1 à 3,
**caractérisée en ce que** pour chaque coupe radiale; les coordonnées X et Y des points composant la coupe sont comprises dans une fourchette de ± 0,10 mm par rapport aux valeurs définies dans le Tableau 1.

5. Secteur de redresseurs comprenant une virole interne, une virole externe et au moins une aube selon l'une quelconque des revendications 1 à 4.

6. Etage de compression comprenant une grille de secteurs de redresseurs et une roue mobile munie d'aubes mobiles, la grille de secteurs de redresseurs comprenant au moins un secteur de redresseurs selon la revendication 5.

7. Compresseur comprenant au moins un étage de compression selon la revendication 6.

8. Turbomachine comprenant au moins un compresseur selon la revendication précédente.
